(19) Europäisches Patentamt
European Patent Office
Office européen des brevets

(11) EP 4 663 666 A1

(12) # EUROPEAN PATENT APPLICATION
published in accordance with Art. 153(4) EPC

(43) Date of publication:
**17.12.2025 Bulletin 2025/51**

(21) Application number: **24753207.0**

(22) Date of filing: **31.01.2024**

(51) International Patent Classification (IPC):
***C08F 2/44*** (2006.01) ***C08K 5/10*** (2006.01)
***C08L 23/26*** (2025.01) ***C08L 71/00*** (2006.01)
***C08L 79/02*** (2006.01) ***C09D 5/00*** (2006.01)
***C09D 11/108*** (2014.01) ***C09D 123/30*** (2006.01)
***C09J 123/30*** (2006.01)

(52) Cooperative Patent Classification (CPC):
**C08F 2/44; C08K 5/10; C08L 23/26; C08L 71/00; C08L 79/02; C09D 5/00; C09D 11/108; C09D 123/30; C09J 123/30**

(86) International application number:
**PCT/JP2024/003043**

(87) International publication number:
**WO 2024/166764 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.02.2023 JP 2023016343**

(71) Applicant: **TOYOBO MC Corporation**
**Osaka-shi, Osaka 530-0001 (JP)**

(72) Inventors:
- **YAMASAKI, Hokuto**
**Takasago-shi, Hyogo 676-0082 (JP)**
- **KASHIHARA, Kenji**
**Takasago-shi, Hyogo 676-0082 (JP)**

(74) Representative: **Vossius & Partner Patentanwälte Rechtsanwälte mbB**
**Siebertstrasse 3**
**81675 München (DE)**

(54) **MODIFIED POLYOLEFIN RESIN COMPOSITION AND USE FOR SAID RESIN COMPOSITION**

(57) The present invention provides a modified polyolefin resin composition comprising an acid-modified polyolefin resin (A), a polyetheramine (B), and a compound having a polymerizable unsaturated group (C).



Processed by Luminess, 75001 PARIS (FR)

## Description

### Technical Field

The present invention relates to a modified polyolefin resin composition and use of the resin composition.

### Background Art

Conventionally, polypropylene, polyethylene, ethylene-propylene copolymers, ethylene-propylene-diene copolymers, polybutene, poly(4-methyl-1-pentene), and other polyolefin resins are used in the fields of automotive parts, electrical parts, building materials, packaging films, and the like because they are relatively inexpensive and have excellent properties, such as chemical resistance, water resistance, and heat resistance.

On the other hand, polyolefin resins are difficult to paint, bond, or the like because they are crystalline and nonpolar.

Accordingly, chlorinated polyolefin resins, which have strong adhesion to polyolefin resins, are widely used as binder resins (e.g., PTL 1 and 2).

From the viewpoint of improving the adherence properties (adhesion) of chlorinated polyolefin resins to substrates and from the viewpoint of compensating for the disadvantage of limited adhesion targets of chlorinated polyolefin resins, mixtures of chlorinated polyolefin resins with acrylic, urethane, or polyester resins, and binder compositions in which these resins are graft-polymerized onto chlorinated polyolefin resins, are also widely used (e.g., PTL 3 and 4).

However, these mixtures and binder compositions are generally used dissolved in organic solvents, such as toluene and xylene, and therefore large amounts of organic solvents are released into the atmosphere during application, which is undesirable from the viewpoint of the environment, hygiene, etc. Furthermore, these mixtures and binder compositions had problems with poor fluidity at low temperatures (e.g., -5°C) and poor adhesion to polyolefin substrates.

### Citation List

#### Patent Literature

PTL 1: JPS59-75958A
PTL 2: JPS60-99138A
PTL 3: JPH6-16746A
PTL 4: JPH8-12913A

### Summary of Invention

#### Technical Problem

The present invention was made in consideration of the above, and an object thereof is to provide a modified polyolefin resin composition having sufficient water resistance, sufficient fluidity within a specific temperature range, and sufficient adhesion to polyolefin substrates.

#### Solution to Problem

As a result of repeated research on dispersing and/or dissolving an acid-modified polyolefin resin in a compound having a polymerizable unsaturated group in order to achieve the above object, the present inventors found that the object can be achieved by a modified polyolefin resin composition comprising an acid-modified polyolefin resin, a polyetheramine, and a compound having a polymerizable unsaturated group. Thus, the present invention was accomplished.

The present invention encompasses, for example, the subject matter set forth in the following item.

Item 1. A modified polyolefin resin composition comprising an acid-modified polyolefin resin (A), a polyetheramine (B), and a compound having a polymerizable unsaturated group (C).

#### Advantageous Effects of Invention

The modified polyolefin resin composition of the present invention has sufficient water resistance, sufficient

fluidity within a specific temperature range, and sufficient adhesion to polyolefin substrates. The modified polyolefin resin composition of the present invention exhibits sufficient fluidity within a specific temperature range, and thus can be suitably used as a liquid modified polyolefin resin composition for various applications.

## Description of Embodiments

Preferred embodiments of the present invention will be described in detail below. The following description of the constituent requirements may be based on representative embodiments and specific examples; however, the present invention is not limited to such embodiments.

In the present specification, the terms "comprise" and "contain" include the concepts of comprising, containing, consisting essentially of, and consisting of.

In the numerical ranges described in stages in the present specification, the upper or lower limit value of a numerical range of a certain stage can be arbitrarily combined with the upper or lower limit value of a numerical range of another stage. In any numerical range described in the present specification, the upper or lower limit value of the numerical range may be replaced with a value shown in the Examples or a value that can be unambiguously derived from the Examples. Furthermore, in the present specification, a numerical value connected with "to" means a numerical range including the numerical values before and after "to" as the lower and upper limit values.

In the present specification, "A and/or B" means "one of A and B" or "both A and B," specifically, "A," "B," or "A and B."

In the present specification, "n-" means "normal," "i-" or "iso-" means "iso," and "tert-" or "t-" means "tertiary."

In the present specification, "(meth)acrylic" encompasses both acrylic and methacrylic, and "(meth)acrylate" encompasses both acrylate and methacrylate.

In the present specification, the "acryloyl group" is represented by "$CH_2=CHC(=O)-$," the "methacryloyl group" is represented by "$CH_2=C(CH_3)C(=O)-$, " the "acryloyloxy group" is represented by "$CH_2=CHC(=O)O-$," and the "methacryloyloxy group" is represented by "$CH_2=C(CH_3)C(=O)O-$."

## Modified Polyolefin Resin Composition

The modified polyolefin resin composition of the present invention comprises, as essential components, an acid-modified polyolefin resin (A), a polyetheramine (B), and a compound having a polymerizable unsaturated group (C).

The modified polyolefin resin composition of the present invention generally has sufficient fluidity within the range of -5°C or higher and 80°C or lower. In the present specification, resin compositions with fluidity refer to, for example, uniform liquid compositions that do not contain coarse resin particles, aggregates, etc.

The modified polyolefin resin composition of the present invention is generally a resin composition that flows when placed in a glass bottle and tilted within the range of -5°C or higher and 80°C or lower. In the present invention, resin compositions with fluidity generally also include resin compositions that flow upon receiving mechanical shear within the range of -5°C or higher and 80°C or lower.

As an embodiment of the present invention, the modified polyolefin resin composition preferably does not contain the following:

(a) a hydrolyzable silyl group-containing polyether resin having a number average molecular weight of 18000, a viscosity at 25°C of 12000 mPa·s, and an average number of hydrolyzable silyl groups per molecule of 1.4; and/or
(b) a hydrolyzable silyl group-containing acrylic polymer having a number average molecular weight of 9000, a viscosity at 25°C of 7000 mPa·s, and an average number of hydrolyzable silyl groups per molecule of 1.0.

As an embodiment of the present invention, the content ratio of a hydrolyzable silyl group-containing polyether resin and/or a hydrolyzable silyl group-containing acrylic polymer to the total mass of the modified polyolefin resin composition is preferably in the order of 55 mass% or less, 50 mass% or less, 45 mass% or less, 40 mass% or less, 35 mass% or less, 30 mass% or less, 25 mass% or less, 20 mass% or less, 15 mass% or less, 10 mass% or less, 7.5 mass% or less, 5 mass% or less, 2.5 mass% or less, 1 mass% or less, 0.5 mass% or less, and 0.1 mass% or less. The expression "the content ratio of a hydrolyzable silyl group-containing polyether resin and a hydrolyzable silyl group-containing acrylic polymer" means the total content ratio (mass%) of the hydrolyzable silyl group-containing polyether resin and the hydrolyzable silyl group-containing acrylic polymer to the total mass of the modified polyolefin resin composition. As an embodiment of the present invention, it is particularly preferable that the modified polyolefin resin composition does not contain a hydrolyzable silyl group-containing polyether resin and/or a hydrolyzable silyl group-containing acrylic polymer.

As an embodiment of the present invention, the total content ratio of the acid-modified polyolefin resin (A), the polyetheramine (B), and the compound having a polymerizable unsaturated group (C) to the total mass of the modified polyolefin resin composition is preferably in the order of 45 mass%, 50 mass%, more than 50 mass%, 55 mass% or more,

60 mass% or more, 65 mass% or more, 70 mass% or more, 75 mass% or more, 80 mass% or more, 85 mass% or more, 90 mass% or more, 92.5 mass% or more, 95 mass% or more, 97.5 mass% or more, 99 mass% or more, 99.5 mass% or more, 99.9 mass% or more, 99.95 mass% or more, and 99.99 mass% or more.

Acid-Modified Polyolefin Resin (A)

The present invention comprises an acid-modified polyolefin resin (A). The acid-modified polyolefin resin (A) is a polymer obtained by graft-polymerization of an α,β-unsaturated carboxylic and/or an acid anhydride thereof onto a polyolefin resin. In other words, the acid-modified polyolefin resin (A) is a graft polymer having a structure with an α,β-unsaturated carboxylic and/or an acid anhydride thereof grafted to a polyolefin resin.

The polyolefin resin generally has an α-olefin-derived structural unit. Examples of α-olefins include α-olefins having 2 to 20 (2, 3, 4, 5, 6, 7, 8, 9, 10, 11, 12, 13, 14, 15, 16, 17, 18, 19, or 20) carbon atoms, such as ethylene, propylene, 1-butene, isobutene, 1-pentene, 4-methyl-1-pentene, 1-hexene, 1-heptene, 1-octene, 1-decene, 1-dodecene, 1-tetradecene, 1-hexadecene, 1-octadecene, and 1-eicosene.

The polyolefin resin may be an olefin polymer including a single α-olefin-derived structural unit or a copolymer of olefin polymers including two or more α-olefin-derived structural units.

In the present invention, the polyolefin resin is generally a petroleum-derived polyolefin resin. Petroleum-derived polyolefin resins are polyolefin resins synthesized from petroleum-derived olefins.

Petroleum-derived olefins are olefins produced by thermal cracking of petrochemical feedstocks such as naphtha, ethane, liquefied petroleum gas (LPG), natural gas liquid (NGL), and gas oil.

In the present invention, examples of polyolefin resins include homopolypropylene (a propylene homopolymer), a propylene-α-olefin copolymer, homopolyethylene (an ethylene homopolymer), an ethylene-α-olefin copolymer, poly-1-butene, a 1-butene-α-olefin copolymer, and the like. These polyolefin resins can be used alone or in a combination of two or more. Preferred among these polyolefin resins are homopolypropylene and/or a propylene-α-olefin copolymer.

In the present invention, the acid-modified polyolefin resin (A) is preferably a graft polymer having a structure with an α,β-unsaturated carboxylic and/or an acid anhydride thereof grafted to homopolypropylene or a propylene-α-olefin copolymer.

The propylene-α-olefin copolymer refers to a copolymer of propylene and an α-olefin. Examples of α-olefins include ethylene and α-olefins having 4 to 20 (4, 5, 6, 7, 8, 9, 10, 11, 12, 13, 14, 15, 16, 17, 18, 19, or 20) carbon atoms, such as 1-butene, isobutene, 1-pentene, 4-methyl-1-pentene, 1-hexene, 1-heptene, 1-octene, 1-decene, 1-dodecene, 1-tetradecene, 1-hexadecene, 1-octadecene, and 1-eicosene. These α-olefins can be used alone or in a combination of two or more.

The content of the propylene component in the propylene-α-olefin copolymer is preferably 50 mol% or more, more preferably 55 mol% or more, even more preferably 60 mol% or more, still even more preferably 65 mol% or more, and particularly preferably 70 mol% or more. When the content of the propylene component in the propylene-α-olefin copolymer is 50 mol% or more, the water resistance of the modified polyolefin resin composition of the present invention and the adhesion thereof to polyolefin substrates (particularly polypropylene substrates) are further improved.

The isotacticity of the α-olefin portion in the propylene-α-olefin copolymer is preferably 30 to 100%, more preferably 50 to 100%, and even more preferably 70 to 100%, from the viewpoint of maintaining better fluidity.

The ethylene-α-olefin copolymer refers to a copolymer of ethylene and an α-olefin. Examples of α-olefins include α-olefins having 3 to 20 (3, 4, 5, 6, 7, 8, 9, 10, 11, 12, 13, 14, 15, 16, 17, 18, 19, or 20) carbon atoms, such as propylene, 1-butene, isobutene, 1-pentene, 4-methyl-1-pentene, 1-hexene, 1-heptene, 1-octene, 1-decene, 1-dodecene, 1-tetradecene, 1-hexadecene, 1-octadecene, and 1-eicosene. These α-olefins can be used alone or in a combination of two or more.

The content of the ethylene component in the ethylene-α-olefin copolymer is preferably 75 mol% or more. When the content of the ethylene component in the ethylene-α-olefin copolymer is 75 mol% or more, the water resistance of the modified polyolefin resin composition of the present invention and the adhesion thereof to polyolefin substrates (particularly polyethylene substrates) are further improved.

The isotacticity of the α-olefin portion in the ethylene-α-olefin copolymer is preferably 30 to 100%, more preferably 50 to 100%, and even more preferably 70 to 100%, from the viewpoint of maintaining better fluidity.

The 1-butene-α-olefin copolymer refers to a copolymer of 1-butene and an α-olefin. Examples of α-olefins include ethylene; propylene; and α-olefins having 5 to 20 (5, 6, 7, 8, 9, 10, 11, 12, 13, 14, 15, 16, 17, 18, 19, or 20) carbon atoms, such as 1-pentene, 4-methyl-1-pentene, 1-hexene, 1-heptene, 1-octene, 1-decene, 1-dodecene, 1-tetradecene, 1-hexadecene, 1-octadecene, and 1-eicosene. These α-olefins can be used alone or in a combination of two or more.

The content of the 1-butene component in the 1-butene-α-olefin copolymer is preferably 65 mol% or more. When the content of the 1-butene component in the 1-butene-α-olefin copolymer is 65 mol% or more, the water resistance of the modified polyolefin resin composition of the present invention and the adhesion thereof to polyolefin substrates (particularly polypropylene substrates or poly-1-butene substrates) are further improved.

The total content of the α,β-unsaturated carboxylic acid and the anhydride component thereof in the acid-modified polyolefin resin (A) is preferably 0.5 to 10 mass%, more preferably 0.7 to 6 mass%, even more preferably 0.8 to 3 mass%, and still more preferably 1 to 2 mass%. When the total content of the α,β-unsaturated carboxylic acid and the anhydride component thereof in the acid-modified polyolefin resin (A) is within the range of 0.5 to 10 mass%, the fluidity of the modified polyolefin resin composition of the present invention is further improved.

In the present invention, the polyolefin resin can be a biobased polyolefin resin instead of a petroleum-derived polyolefin resin. The term "biobased polyolefin resin" refers to a polyolefin resin produced from biological resources (biomass). The term "biomass" refers to materials made from renewable biological organic resources, excluding fossil resources.

When using a biobased polyolefin resin, preferably, the polyolefin resin has a propylene structural unit. When using a biobased polyolefin resin, the biobased content of the polyolefin resin is generally 25% or more, preferably 27% or more, and more preferably 30% or more. The upper limit of the biobased content is not particularly limited as long as it is 100% or less. The biobased content of the polyolefin resin can be calculated from the carbon-14 isotope content measured in accordance with ASTM D 6866, for example.

Examples of the α,β-unsaturated carboxylic acid or the acid anhydride thereof to be graft-polymerized onto a polyolefin resin include maleic acid, maleic anhydride, fumaric acid, citraconic acid, citraconic anhydride, mesaconic acid, itaconic acid, itaconic anhydride, aconitic acid, aconitic anhydride, himic anhydride, and the like. Preferred among these α,β-unsaturated carboxylic acids or acid anhydrides thereof are maleic acid, maleic anhydride, and itaconic anhydride; and more preferred are maleic acid and maleic anhydride.

The acid value of each of the α,β-unsaturated carboxylic acid and the anhydride component thereof in the acid-modified polyolefin resin (A) is preferably 1 to 100 mgKOH/g, more preferably 5 to 50 mgKOH/g, even more preferably 10 to 40 mgKOH/g, and still more preferably 15 to 30. When the acid value of each of the α,β-unsaturated carboxylic acid and the anhydride component thereof in the acid-modified polyolefin resin (A) is within the range of 1 to 100 mgKOH/g, the fluidity of the modified polyolefin resin composition of the present invention is further improved.

The acid value of each of the α,β-unsaturated carboxylic acid and the anhydride component thereof in the acid-modified polyolefin resin (A) can be determined using a Fourier transform infrared spectrophotometer (FT-IR) and the following formula using the coefficient (f) derived from a calibration curve prepared with a chloroform solution of maleic anhydride and the absorbance (I) of the stretching peak (1780 $cm^{-1}$) of a carbonyl anhydride (C=O) bond in an acid-modified polyolefin solution.

Acid value (mgKOH/g) = absorbance (I) × coefficient (f) × 2 × molecular weight of potassium hydroxide × 1000 (mg)/molecular weight of succinic anhydride    Formula (i)

In formula (i), the molecular weight of succinic anhydride is 100.07, and the molecular weight of potassium hydroxide is 56.11.

Known methods can be widely used to graft-polymerize an α,β-unsaturated carboxylic acid or an anhydride thereof onto a polyolefin resin. Examples of such methods include a method of heating and melting a polyolefin at a temperature equal to or higher than its melting point in the presence of a radical generator to allow reaction with an α,β-unsaturated carboxylic acid or an anhydride thereof (melting method), and a method of heating and stirring a polyolefin that has been dissolved in an organic solvent in the presence of a radical generator to allow reaction with an α,β-unsaturated carboxylic acid or an anhydride thereof (solution method).

In the present invention, the acid-modified polyolefin resin (A) may be an acid-modified chlorinated polyolefin resin that has been further chlorinated. As the method of chlorination, for example, chlorine gas is blown into an acid-modified polyolefin resin to introduce chlorine atoms. More specifically, chlorination can be carried out by dispersing or dissolving an acid-modified polyolefin resin in a solvent as required, then blowing chlorine gas thereinto in the presence of a catalyst or under ultraviolet irradiation, under elevated or normal pressure (atmospheric pressure) in a temperature range of 50 to 150°C.

Examples of the solvent used in chlorination include water and chlorinated solvents (e.g., chloroform, methylene chloride, and carbon tetrachloride), with chlorinated solvents being preferred. The chlorinated solvent may be distilled off under reduced pressure at the end of chlorination, or may be replaced with another organic solvent.

Examples of the catalyst used in chlorination include radical initiators. Examples of radical initiators include tert-butyl peroxy-2-ethylhexanoate, tert-butyl peroxyoctoate, di-tert-butyl peroxide, dicumyl peroxide, and the like.

When the acid-modified polyolefin resin (A) is chlorinated, the chlorine content of the acid-modified chlorinated polyolefin resin is preferably 5 mass% or more, more preferably 8 mass% or more, even more preferably 10 mass% or more, particularly preferably 12 mass% or more, and most preferably 14 mass% or more. When the chlorine content of the acid-modified chlorinated polyolefin resin is 5 mass% or more, the solution stability is better, facilitating the emulsification of the acid-modified chlorinated polyolefin resin.

The chlorine content of the acid-modified chlorinated polyolefin resin is preferably 40 mass% or less, more preferably 38 mass% or less, even more preferably 35 mass% or less, particularly preferably 32 mass% or less, and most preferably 30 mass% or less. When the chlorine content of the acid-modified chlorinated polyolefin resin is 40 mass% or less, the crystallinity of the acid-modified chlorinated polyolefin is increased, further improving the adhesion to polyolefin substrates.

When the acid-modified polyolefin resin (A) is chlorinated, the chlorine content of the acid-modified chlorinated polyolefin resin is preferably 5 mass% or more and 40 mass% or less, more preferably 8 mass% or more and 38 mass% or less, even more preferably 10 mass% or more and 35 mass% or less, still more preferably 12 mass% or more and 32 mass% or less, and particularly preferably 14 mass% or more and 30 mass% or less.

The chlorine content of the acid-modified chlorinated polyolefin resin can be measured in accordance with JIS K-7229-1995. Specifically, the chlorine content can be measured using the "oxygen flask combustion method," in which the acid-modified chlorinated polyolefin resin is burned in an oxygen atmosphere, the generated chlorine gas is absorbed with water, and the chlorine content is determined by titration.

The melting point of the acid-modified polyolefin resin (A) is preferably 90°C or lower, more preferably 85°C or lower, and particularly preferably 80°C or lower. When the melting point of the acid-modified polyolefin resin (A) is 90°C or lower, the adhesion to polyolefin substrates is further improved.

The melting point of the acid-modified polyolefin resin (A) is preferably 50°C or higher, more preferably 55°C or higher, and particularly preferably 60°C or higher. When the melting point of the acid-modified polyolefin resin (A) is 50°C or higher, the adhesion to polyolefin substrates is further improved.

The melting point of the acid-modified polyolefin resin (A) can be measured with a differential scanning calorimeter (DSC) in accordance with JIS K 7121-2012. Specifically, with a DSC meter, about 5 mg of a sample is maintained in a heated and melted state at 150°C for 10 minutes and then cooled at a rate of 10°C/minute until the sample is stabilized and maintained at - 50°C. Thereafter, the sample is further heated to 150°C at a rate of 10°C/minute, and the peak melting temperature at which the sample is melted is measured and evaluated as the melting point.

The weight average molecular weight (Mw) of the acid-modified polyolefin resin (A) is preferably 3000 to 200000, more preferably 10000 to 150000, even more preferably 20000 to 120000, still more preferably 30000 to 100000, and particularly preferably 40000 to 90000. When the weight average molecular weight (Mw) of the acid-modified polyolefin resin (A) is within the range of 3000 to 200000, good fluidity is ensured. In addition, when the Mw is within the range of 3000 to 200000, the cohesive force of the acid-modified polyolefin resin (A) is further improved, and the adhesion is further improved. The weight average molecular weight (Mw) of the acid-modified polyolefin resin (A) can be measured by gel permeation chromatography (GPC). The specific measurement method will be explained in the Examples described below.

In the present invention, the tensile modulus of the acid-modified polyolefin resin (A) is preferably 10 MPa or more, more preferably 50 MPa or more, and even more preferably 100 MPa or more. When the tensile modulus is 10 MPa or more, a coating film formed from the modified polyolefin resin composition tends to have better adhesion. The upper limit is not particularly limited, but it is preferably 2000 MPa or less, more preferably 1000 MPa or less, even more preferably 500 MPa or less, and still more preferably 300 MPa or less. A specific tensile modulus measurement method will be explained in the Examples described below.

The acid-modified polyolefin resin (A) may be further copolymerized with a radically polymerizable monomer as long as the effects of the present invention are not impaired. The content of the radically polymerizable monomer is generally 40 parts by mass or less, preferably 20 parts by mass or less, more preferably 5 parts by mass or less, and even more preferably 1 part by mass or less, per 100 parts by mass of the acid-modified polyolefin resin (A).

The form in which the acid-modified polyolefin resin (A) is copolymerized with a radically polymerizable monomer is not limited. Examples of the form of copolymerization include random copolymerization, block copolymerization, graft copolymerization (graft modification), and the like.

Examples of radically polymerizable monomers include (meth)acrylic compounds, vinyl compounds, and the like. (Meth)acrylic compounds refer to compounds containing at least one (meth)acryloyl group (an acryloyl group and/or a methacryloyl group) in the molecule.

Examples of radically polymerizable monomers include (meth)acrylic acid, methyl (meth)acrylate, ethyl (meth) acrylate, n-butyl (meth)acrylate, cyclohexyl (meth)acrylate, hydroxyethyl (meth)acrylate, isobornyl (meth)acrylate, glycidyl (meth)acrylate, octyl (meth)acrylate, lauryl (meth)acrylate, tridecyl (meth)acrylate, stearyl (meth)acrylate, cyclohexyl (meth)acrylate, benzyl (meth)acrylate, phenyl (meth)acrylate, dimethylaminoethyl (meth)acrylate, diethylaminoethyl (meth)acrylate, hydroxyethyl (meth)acrylate, 2-hydroxyethyl (meth)acrylate, N,N-dimethylaminoethyl (meth)acrylate, acetoacetoxyethyl (meth)acrylate, N-methyl(meth)acrylamide, N-ethyl(meth)acrylamide, N-propyl(meth)acrylamide, N-isopropyl(meth)acrylamide, N-butyl(meth)acrylamide, N-isobutyl(meth)acrylamide, N-t-butyl(meth)acrylamide, N,N-dimethyl(meth)acrylamide, N,N-dimethylaminopropyl(meth)acrylamide, N,N-methylene-bis(meth)acrylamide, N-methylol(meth)acrylamide, hydroxyethyl(meth)acrylamide, (meth)acryloylmorpholine, n-butyl vinyl ether, 4-hydroxybutyl vinyl ether, and dodecyl vinyl ether. Preferred among these are methyl (meth)acrylate, ethyl (meth)acrylate, cyclohexyl (meth)acrylate, and lauryl (meth)acrylate; and more preferred are these methacrylates, i.e., methyl methacrylate, ethyl methacrylate, cyclohexyl methacrylate, and lauryl methacrylate. These radically polymerizable monomers can be used alone or in a combination of two or more.

In the present invention, the content of the acid-modified polyolefin resin (A) is generally 5 to 120 parts by mass, preferably 10 to 90 parts by mass, more preferably 12.5 to 70 parts by mass, even more preferably 15 to 50 parts by mass, still more preferably 17.5 to 40 parts by mass, and particularly preferably 20 to 35 parts by mass, per 100 parts by mass of the compound having a polymerizable unsaturated group (C).

In the present invention, the content ratio of the acid-modified polyolefin resin (A) to the total mass of the modified polyolefin resin composition is preferably 1 to 60 mass%, more preferably 4 to 50 mass%, even more preferably 7 to 40 mass%, still more preferably 10 to 35 mass%, and particularly preferably 15 to 30 mass%, from the viewpoint of maintaining better fluidity of the modified polyolefin resin composition and further improving the water resistance of the modified polyolefin resin composition and the adhesion thereof to polyolefin substrates.

Polyetheramine (B)

The present invention contains a polyetheramine (B). The polyetheramine (B) is generally a compound having a polyether chain and an amino group.

In the present invention, preferably, the polyetheramine (B) has a polyether chain, wherein the polyether chain has a structure comprising at least one selected from the group consisting of:

a structure represented by formula 1: $-(O-CH_2CH_2)x-$, wherein x is an integer from 2 to 120,
a structure represented by formula 2-1: $-(O-CH_2CH(CH_3))y_1-$, wherein $y_1$ is an integer from 2 to 90,
a structure represented by formula 2-2: $-(O-CH_2CH_2CH_2)y_2-$, wherein $y_2$ is an integer from 2 to 90,
a structure represented by formula 3-1: $-(O-CH_2CH_2CH_2CH_2)z_1-$, wherein $z_1$ is an integer from 2 to 80,
a structure represented by formula 3-2: $-(O-CH(CH_3)CH_2CH_2)z_2-$, wherein $z_2$ is an integer from 2 to 80,
a structure represented by formula 3-3: $-(O-CH_2CH(CH_3)CH_2)z_3-$, wherein $z_3$ is an integer from 2 to 80, and
a structure represented by formula 3-4: $-(O-CH_2CH_2CH(CH_3))z_4-$, wherein $z_4$ is an integer from 2 to 80.

In the present invention, more preferably, the polyetheramine (B) has a polyether chain, wherein the polyether chain has a structure comprising at least one selected from the group consisting of:

a structure represented by formula 1: $-(O-CH_2CH_2)x-$, wherein x is an integer from 2 to 120,
a structure represented by formula 2-1: $-(O-CH_2CH(CH_3))y_1-$, wherein $y_1$ is an integer from 2 to 90, and
a structure represented by formula 3-1: $-(O-CH_2CH_2CH_2CH_2)z_1-$, wherein $z_1$ is an integer from 2 to 80.

In the present invention, even more preferably, the polyetheramine (B) is a compound represented by the following formula 1A:

$$R^1-(O-R^2)a-R^3 \qquad \text{Formula 1A}$$

wherein $R^1$ and $R^3$ each independently represent an amino group or a linear or branched alkyl group having 1 to 10 (1, 2, 3, 4, 5, 6, 7, 8, 9, or 10) carbon atoms and optionally having an amino group,
$R^2$ represents a linear or branched alkylene group having 2 to 4 carbon atoms, and
a is an integer from 1 to 120.

In formula 1A, examples of the alkyl group having 1 to 10 (1, 2, 3, 4, 5, 6, 7, 8, 9, or 10) carbon atoms include methyl, ethyl, n-propyl, isopropyl, n-butyl, isobutyl, sec-butyl, tert-butyl, n-hexyl, n-heptyl, n-octyl, n-nonyl, and n-decyl.

In formula 1A, the linear or branched alkylene group having 2 to 4 (2, 3, or 4) carbon atoms is preferably an ethylene group ($-CH_2CH_2-$), a methylethylene group ($-CH_2CH(CH_3-$), an n-propylene group ($-CH_2CH_2CH_2-$), a 1-methylpropylene group ($-CH(CH_3)CH_2CH_2-$), a 2-methylpropylene group, ($-CH_2CH(CH_3)CH_2-$), a 3-methylpropylene group ($-CH_2CH_2CH(CH_3)-$), or an n-butylene group ($-CH_2CH_2CH_2CH_2-$).

In formula 1A, preferably, $R^1$ represents a linear or branched alkyl group having 1 to 10 (1, 2, 3, 4, 5, 6, 7, 8, 9, or 10) carbon atoms, $R^2$ represents a linear or branched alkylene group having 2 to 4 carbon atoms, $R^3$ represents an amino group, and a is an integer from 1 to 120.

In the present invention, preferably, the polyetheramine (B) has a primary amino group or a secondary amino group at one end thereof and the polyetheramine (B) has a weight average molecular weight (Mw) of 200 to 50000, from the viewpoint of stably dissolving and/or dispersing the acid-modified polyolefin resin (A) in the compound having a polymerizable unsaturated group (C). In the present invention, more preferably, the polyetheramine (B) has a primary

amino group or a secondary amino group at one end thereof and the polyetheramine (B) has a weight average molecular weight (Mw) of 300 to 10000. In the present invention, even more preferably, the polyetheramine (B) has a primary amino group at one end thereof and the polyetheramine (B) has a weight average molecular weight (Mw) of 500 to 5000.

In the present invention, the polyetheramine (B) is generally a polymer compound having a weight average molecular weight (Mw) within the range of 200 to 50000, from the viewpoint of stably dissolving and/or dispersing the acid-modified polyolefin resin (A) in the compound having a polymerizable unsaturated group (C). When the Mw of the polyetheramine (B) is within this range, the steric repulsion of the polyetheramine (B) in the compound having a polymerizable unsaturated group (C) is likely to increase, which makes it possible to stably disperse and/or dissolve the acid-modified polyolefin resin (A) in the compound having a polymerizable unsaturated group (C).

In the present invention, the weight average molecular weight (Mw) of the polyetheramine (B) is generally 200 to 50000, preferably 300 to 20000, more preferably 350 to 10000, even more preferably 450 to 7000, and particularly preferably 500 to 5000.

The weight average molecular weight (Mw) of the polyetheramine (B) in the present invention can be measured by GPC and converted from the calibration curve of polystyrene. The GPC measurement is carried out by a conventionally known method using a commercially available device with THF or the like as a solvent.

In the present invention, the HLB value of the polyetheramine (B) is preferably 2 to 20, more preferably 5 to 19, and even more preferably 8 to 18. When the HLB value is within the range of 2 to 20, it is possible to maintain better fluidity of the modified polyolefin resin composition.

In the present invention, the HLB value is a value that indicates the degree of hydrophilicity or lipophilicity (hydrophobicity) of the polyetheramine (B). In the present invention, the HLB value is a value determined by the Griffin method. In the Griffin method, the HLB value is calculated based on the following formula (ii):

$$\text{HLB value} = 20 \times \text{total formula weight of hydrophilic part/molecular weight} \quad \text{Formula (ii).}$$

The polyetheramine (B) can be bonded to the acid-modified polyolefin resin (A) by various reaction forms. Examples of such reaction forms include reaction forms that form covalent and/or ionic bonds. More specific examples include an amidation reaction between the carboxylic anhydride group and the primary or secondary amino group, an imidization reaction, and a neutralization reaction between the carboxylic acid group and the primary or secondary amino group.

As the polyetheramine (B), known commercial products can be widely used. Examples of commercial products of the polyetheramine (B) include the following manufactured by Huntsman:

JEFFAMINE M-600 (MW = 600, HLB value = 2.1),
JEFFAMINE M-1000 (MW = 1000, HLB value = 16.1),
JEFFAMINE M-2005 (MW = 2000, HLB value = 2.7),
JEFFAMINE M-2070 (MW = 2000, HLB value = 13.8),
JEFFAMINE M-3085 (MW = 3000, HLB value = 16.8),
JEFFAMINE D-230 (MW = 230, HLB value = 3.6),
JEFFAMINE D-400 (MW = 430, HLB value = 1.7),
JEFFAMINE D-2000 (MW = 2000, HLB value = 0.3),
JEFFAMINE D-4000 (MW = 4000, HLB value = 0.2),
JEFFAMINE ED-600 (MW = 600, HLB value = 13.4),
JEFFAMINE ED-900 (MW = 900, HLB value = 12.5), and
JEFFAMINE ED-2003 (MW = 2000, HLB value = 16.7).

These commercial products can be used alone or in a combination of two or more.

In the present invention, the content of the polyetheramine (B) is generally 6 to 100 parts by mass, preferably 10 to 90 parts by mass, more preferably 15 to 80 parts by mass, even more preferably 20 to 70 parts by mass, still more preferably 25 to 60 parts by mass, and particularly preferably 30 to 50 parts by mass, per 100 parts by mass of the acid-modified polyolefin resin (A), from the viewpoint of maintaining better fluidity of the modified polyolefin resin composition and further improving the adhesion thereof to polyolefin substrates.

In the present invention, the content ratio of the polyetheramine (B) to the total mass of the modified polyolefin resin composition is generally 0.5 to 40 mass%, preferably 1 to 30 mass%, more preferably 2 to 20 mass%, even more preferably 3 to 15 mass%, still more preferably 4 to 12.5 mass%, and particularly preferably 5 to 10 mass%, from the viewpoint of maintaining better fluidity of the modified polyolefin resin composition and further improving the adhesion thereof to polyolefin substrates.

Compound Having Polymerizable Unsaturated Group (C)

The present invention comprises a compound having a polymerizable unsaturated group (C). The compound having a polymerizable unsaturated group (C) generally has one or more (e.g., one, two, three, or four) polymerizable unsaturated groups. In the present invention, the term "polymerizable unsaturated group" refers to an unsaturated group capable of radical polymerization. In the present invention, the number of polymerizable unsaturated groups in the compound having a polymerizable unsaturated group (C) is preferably one or two.
In the present invention, the polymerizable unsaturated group in the compound having a polymerizable unsaturated group (C) is preferably at least one selected from the group consisting of an acryloyl group, a methacryloyl group, an acryloyloxy group, a methacryloyloxy group, a vinyl group, an allyl group, a propenyl group, an isopropenyl group, a maleimide group, and a vinyl ether group.
In the present invention, the polymerizable unsaturated group in the compound having a polymerizable unsaturated group (C) is more preferably at least one selected from the group consisting of an acryloyl group, a methacryloyl group, an acryloyloxy group, and a methacryloyloxy group.
In the present invention, the polymerizable unsaturated group in the compound having a polymerizable unsaturated group (C) is more preferably an acryloyloxy group and/or a methacryloyloxy group.
In the present invention, preferably, the compound having a polymerizable unsaturated group (C) comprises a compound having a hydroxy group and one or more (e.g., one, two, three, or four) polymerizable unsaturated groups. In this case, the number of hydroxy groups is preferably one or two, more preferably one. In the present invention, more preferably, the compound having a polymerizable unsaturated group (C) comprises a compound having a hydroxy group and one to three (one, two, or three) polymerizable unsaturated groups. In this case, the number of hydroxy groups is preferably one or two, and more preferably one.
In the present invention, preferably, the compound having a polymerizable unsaturated group (C) comprises a compound having an alkyleneoxy group and/or a linear or branched alkyl group having 1 to 20 (1, 2, 3, 4, 5, 6, 7, 8, 9, 10, 11, 12, 13, 14, 15, 16, 17, 18, 19, or 20) carbon atoms and one or more (e.g., one, two, three, or four) polymerizable unsaturated groups, from the viewpoint of maintaining better fluidity of the modified polyolefin resin composition. In this case, the number of polymerizable unsaturated groups is preferably one or two, and more preferably two.
In the present invention, preferably, the compound having a polymerizable unsaturated group (C) comprises a compound having a linear or branched alkyl group having 1 to 20 (1, 2, 3, 4, 5, 6, 7, 8, 9, 10, 11, 12, 13, 14, 15, 16, 17, 18, 19, or 20) carbon atoms and one or more (e.g., one, two, three, or four) polymerizable unsaturated groups. In this case, the number of polymerizable unsaturated groups is preferably one or two, and more preferably one.
In the present invention, preferably, the compound having a polymerizable unsaturated group (C) comprises:

a compound having a hydroxy group and one or more (e.g., one, two, three, or four) polymerizable unsaturated groups; and
a compound having an alkyleneoxy group and/or a linear or branched alkyl group having 1 to 20 (1, 2, 3, 4, 5, 6, 7, 8, 9, 10, 11, 12, 13, 14, 15, 16, 17, 18, 19, or 20) carbon atoms and one or more (e.g., one, two, three, or four) polymerizable unsaturated groups.

In the present invention, more preferably, the compound having a polymerizable unsaturated group (C) comprises:

a compound having a hydroxy group and one or two polymerizable unsaturated groups; and
a compound having an alkyleneoxy group and/or a linear or branched alkyl group having 1 to 20 (1, 2, 3, 4, 5, 6, 7, 8, 9, 10, 11, 12, 13, 14, 15, 16, 17, 18, 19, or 20) carbon atoms and one or two polymerizable unsaturated groups.

In the present invention, the alkyleneoxy group generally has a structure represented by the following formula 4:

$$-(Y^1\text{-}O)m- \qquad \text{Formula 4}$$

wherein $Y^1$ represents a linear or branched alkylene group having 1 to 10 (1, 2, 3, 4, 5, 6, 7, 8, 9, or 10) carbon atoms, and m represents an integer from 1 to 20.
In formula 4, $Y^1$ is preferably a linear or branched alkylene group having 1 to 5 (1, 2, 3, 4, or 5) carbon atoms.
In formula 4, m is preferably an integer from 2 to 15.
In the present invention, preferably, the compound having a polymerizable unsaturated group (C) comprises a compound represented by the following formula 5:

$$R^a\text{-}R^b\text{-}R^c \qquad \text{Formula 5}$$

wherein $R^a$ represents a polymerizable unsaturated group, $R^c$ represents a polymerizable unsaturated group or a methyl group, $R^b$ represents a group represented by $-(Y^2-O)n-$ or a linear or branched alkylene group having 1 to 20 (1, 2, 3, 4, 5, 6, 7, 8, 9, 10, 11, 12, 13, 14, 15, 16, 17, 18, 19, or 20) carbon atoms, $Y^2$ represents a linear or branched alkylene group having 1 to 10 (1, 2, 3, 4, 5, 6, 7, 8, 9, or 10) carbon atoms, and
n represents an integer from 1 to 20.

In formula 5, $Y^2$ is preferably a linear or branched alkylene group having 1 to 5 (1, 2, 3, 4, or 5) carbon atoms.
In formula 5, n is preferably an integer from 2 to 15.
In the present invention, more preferably, the compound having a polymerizable unsaturated group (C) comprises one or more compounds represented by formula 5.
In the present invention, preferably, the compound having a polymerizable unsaturated group (C) comprises a compound having a (meth)acryloyloxy group as the polymerizable unsaturated group. Examples of the compound having a (meth)acryloyloxy group include a compound having one (meth)acryloyloxy group, a compound having two (meth) acryloyloxy groups, a compound having three or more (meth)acryloyloxy groups, and the like. These compounds can be used alone or in a combination of two or more.
Examples of the compound having one (meth)acryloyloxy group include:

alkyl (meth)acrylates, such as 2-hydroxyethyl (meth)acrylate, 2-hydroxypropyl (meth)acrylate, 3-hydroxypropyl (meth)acrylate, 4-hydroxybutyl (meth)acrylate, 1, 4-cyclohexanedimethanol monoacrylate, polyethylene glycol mono(meth)acrylate, polypropylene glycol mono(meth)acrylate, polybutylene glycol mono(meth)acrylate, polyethylene glycol-polypropylene glycol mono(meth)acrylate, 2-hydroxy-3-phenoxypropyl (meth)acrylate, phenoxydiethylene glycol (meth)acrylate, methyl(meth)acrylate, ethyl (meth)acrylate, n-propyl (meth)acrylate, i-propyl (meth) acrylate, n-butyl (meth)acrylate, i-butyl (meth)acrylate, t-butyl (meth)acrylate, n-hexyl (meth)acrylate, n-octyl (meth)acrylate, 2-ethylhexyl (meth)acrylate, dodecyl (meth)acrylate, stearyl (meth)acrylate, and behenyl (meth) acrylate;
(meth)acrylates having an alicyclic structure, such as cyclohexyl (meth)acrylate and isobornyl (meth)acrylate;
(meth)acrylates having an aromatic ring, such as benzyl (meth)acrylate, phenoxyethyl acrylate, and phenoxyethyl methacrylate;
(meth)acrylates having an amino group, such as dimethylaminoethyl (meth)acrylate, diethylaminoethyl (meth) acrylate, t-butylaminoethyl (meth)acrylate, methylethylaminoethyl (meth)acrylate, dimethylaminostyrene, diethylaminostyrene, pentamethylpiperidinyl (meth)acrylate, and tetramethylpiperidinyl (meth)acrylate;
(meth)acrylates having an epoxy group, such as glycidyl (meth)acrylate, and 3,4-epoxycyclohexyl (meth)acrylate; and
(meth)acrylates having an ether group, such as methoxymethyl (meth)acrylate, ethoxymethyl (meth)acrylate, propoxymethyl (meth)acrylate, 2-methoxyethyl (meth)acrylate, 1-methoxyethyl (meth)acrylate, 2-ethoxyethyl (meth)acrylate, 1-ethoxyethyl (meth)acrylate, 2-propoxyethyl (meth)acrylate, and 2-isopropoxyethyl (meth)acrylate. These compounds can be used alone or in a combination of two or more.

Examples of the compound having two (meth)acryloyloxy groups include:

alkanediol di(meth)acrylates, such as 1,4-butanediol di(meth)acrylate, neopentyl glycol di(meth)acrylate, 1,6-hexanediol di(meth)acrylate, 1,9-nonanediol di(meth)acrylate, and tricyclodecane dimethylol di(meth)acrylate;
bisphenol-modified di(meth)acrylates, such as bisphenol A ethylene oxide-modified di(meth)acrylate and bisphenol F ethylene oxide-modified di(meth)acrylate; and
ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, urethane di(meth) acrylate, epoxy di(meth)acrylate, glycerol di(meth)acrylate, and the like. These compounds can be used alone or in a combination of two or more.

Examples of the compound having three or more (meth)acryloyloxy groups include:

dipentaerythritol hexa(meth)acrylate, pentaerythritol tetra(meth)acrylate, ditrimethylolpropane tetra(meth)acrylate, pentaerythritol tri(meth)acrylate, trimethylolpropane tri(meth)acrylate;
ethylene oxide-modified (meth)acrylates, such as ethylene oxide-modified dipentaerythritol hexa(meth)acrylate, and ethylene oxide-modified pentaerythritol tetra(meth)acrylate;
isocyanuric acid-modified tri(meth)acrylates, such as isocyanuric acid ethylene oxide-modified tri(meth)acrylate, and ε-caprolactone-modified tris(acryloyloxyethyl)isocyanurate; and

urethane methacrylates, such as pentaerythritol tri(meth)acrylate hexamethylene diisocyanate urethane prepolymer, pentaerythritol tri(meth)acrylate toluene diisocyanate urethane prepolymer, and dipentaerythritol penta(meth)acrylate hexamethylene diisocyanate urethane prepolymer. These compounds can be used alone or in a combination of two or more.

In the present invention, more preferably, the compound having a polymerizable unsaturated group (C) comprises a compound having two (meth)acryloyloxy groups, from the viewpoint of stably dissolving and/or dispersing the acid-modified polyolefin resin (A) in the compound having a polymerizable unsaturated group (C) and suppressing agglomeration.

Preferably, the compound having two (meth)acryloyloxy groups is at least one selected from the group consisting of neopentyl glycol di(meth)acrylate, 1,6-hexanediol di(meth)acrylate, 1,9-nonanediol di(meth)acrylate, tricyclodecane dimethylol di(meth)acrylate, dipropylene glycol di(meth)acrylate, tripropylene glycol di(meth)acrylate, tetrapropylene glycol di(meth)acrylate, and polypropylene glycol di(meth)acrylate.

In the present invention, in addition to the above, specific examples of the compound having a polymerizable unsaturated group (C) also include compounds having an amide group such as (meth)acrylamide, N-methoxymethyl-(meth)acrylamide, N-ethoxymethyl-(meth)acrylamide, N-propoxymethyl-(meth)acrylamide, N-butoxymethyl-(meth)acrylamide, N-pentoxymethyl-(meth)acrylamide, N,N-di(methoxymethyl)acrylamide, N-ethoxymethyl-N-methoxymethyl methacrylamide, N,N-di(ethoxymethyl)acrylamide, N-ethoxymethyl-N-propoxymethyl methacrylamide, N,N-di(propoxymethyl)acrylamide, N-butoxymethyl-N-(propoxymethyl) methacrylamide, N,N-di(butoxymethyl)acrylamide, N-butoxymethyl-N-(methoxymethyl) methacrylamide, N,N-di(pentoxymethyl)acrylamide, N-methoxymethyl-N-(pentoxymethyl) methacrylamide, N,N-dimethylaminopropyl acrylamide, N,N-diethylaminopropyl acrylamide, N,N-dimethylacrylamide, N,N-diethylacrylamide, and diacetone (meth)acrylamide; aromatic vinyl compounds such as styrene, α-methylstyrene, o-methylstyrene, p-methylstyrene, m-methylstyrene, vinylnaphthalene, and indene; (meth)acrylonitrile, acryloylmorpholine, and the like.

In the present invention, the content ratio of the compound having a polymerizable unsaturated group (C) to the total mass of the modified polyolefin resin composition is generally 10 to 90 mass%, preferably 20 to 85 mass%, more preferably 30 to 80 mass%, even more preferably 40 to 77 mass%, and particularly preferably 50 to 75 mass%, from the viewpoint of maintaining better fluidity of the modified polyolefin resin composition and further improving the water resistance of the modified polyolefin resin composition and the adhesion thereof to polyolefin substrates.

In the present invention, preferably, the compound having a polymerizable unsaturated group (C) comprises a compound having a hydroxy group and one or more (e.g., one, two, three, or four) polymerizable unsaturated groups, from the viewpoint of maintaining better fluidity of the modified polyolefin resin composition and further improving the water resistance of the modified polyolefin resin composition and the adhesion thereof to polyolefin substrates. In this case, the content ratio of the compound having a hydroxy group and one or more (e.g., one, two, three, or four) polymerizable unsaturated groups to the total mass of the modified polyolefin resin composition is preferably 1 to 50 mass%, more preferably 2 to 45 mass%, and even more preferably 3 to 40 mass%, from the viewpoint of maintaining better fluidity of the modified polyolefin resin composition and further improving the water resistance of the modified polyolefin resin composition and the adhesion thereof to polyolefin substrates.

In the present invention, more preferably, the compound having a polymerizable unsaturated group (C) comprises a compound having a hydroxy group and one or two polymerizable unsaturated groups, from the viewpoint of maintaining better fluidity of the modified polyolefin resin composition and further improving the water resistance of the modified polyolefin resin composition and the adhesion thereof to polyolefin substrates.

Specific examples of the compound having a hydroxy group and one or more (e.g., one, two, three, or four) polymerizable unsaturated groups include 2-hydroxy-1,3-dimethacryloxypropane, 2-hydroxy-3-methacrylpropyl acrylate, glycerol diacrylate, pentaerythritol di(meth)acrylate, pentaerythritol tri(meth)acrylate, and the like.

In the present invention, preferably, the compound having a polymerizable unsaturated group (C) comprises a compound having an unit having a carbonyl group and one or more (e.g., one, two, three, or four) polymerizable unsaturated groups, from the viewpoint of maintaining better fluidity of the modified polyolefin resin composition.

In the present invention, more preferably, the compound having a polymerizable unsaturated group (C) comprises a compound having a unit having a carbonyl group represented by the following formula (1) or (2) and one or more (e.g., one, two, three, or four) polymerizable unsaturated groups:

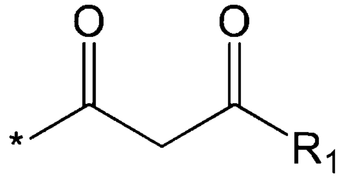

(1)

wherein $R_1$ represents a hydrogen atom or a methyl group, and,
* represents a bond,

in formula (1), preferably, the bond is formed with an oxygen atom,
**[0114]** in formula (1), preferably, $R_1$ is a methyl group, and
in formula (1), more preferably, $R_1$ is a methyl group and the bond is formed with an oxygen atom;

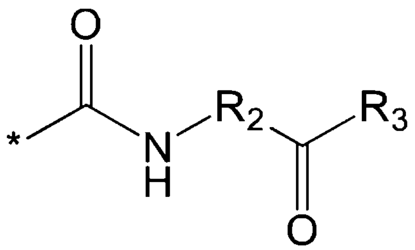
(2)

wherein $R_2$ is a hydrocarbon group having 1 to 10 carbon atoms or a hydrocarbon group having 1 to 10 carbon atoms and substituted with a substituent such as a halogen atom (F, Cl, Br, or I) or an alkoxy group,
$R_3$ is a hydrogen atom, a hydrocarbon group having 1 to 10 carbon atoms, or a hydrocarbon group having 1 to 10 carbon atoms and substituted with a substituent such as an aldehyde group, an acetyl group, a halogen atom (F, Cl, Br, or I), or an alkoxy group, and
* represents a bond.

The hydrocarbon group may include a branched structure, an alicyclic structure such as cyclohexyl, or an aromatic ring structure such as phenyl or naphthyl.
In formula (2), preferably, the bond is formed with an oxygen atom.
In the present invention, more preferably, the compound having a unit having a carbonyl group and one or more polymerizable unsaturated group comprises one or more compounds having a unit having a carbonyl group represented by formula (1) or (2) and one or more (e.g., one, two, three, or four) polymerizable unsaturated groups.
In the present invention, even more preferably, the compound having a polymerizable unsaturated group (C) comprises a compound having a unit having a carbonyl group represented by formula (1) and one or more (e.g., one, two, three, or four) polymerizable unsaturated groups.
In the present invention, still more preferably, the compound having a polymerizable unsaturated group (C) comprises a compound having a unit having a carbonyl group represented by formula (1) and one polymerizable unsaturated group.
Examples of the compound having a unit represented by formula (1) or (2) and one or more (e.g., one, two, three, or four) polymerizable unsaturated groups include:

esters with acrylic acid and acetoacetic acid, such as acetoacetoxy (meth)acrylate, acetoacetoxyethyl (meth) acrylate, acetoacetoxypropyl (meth)acrylate, allyl acetoacetate, acetoacetoxybutyl (meth)acrylate, and 2,3-di(acetoacetoxy)propyl (meth)acrylate;
esters with crotonic acid and acetoacetic acid, such as 2-acetoacetoxyethyl crotonate and 2-acetoacetoxypropyl crotonate; acetoacetates of N-alkylol (meth)acrylamide such as acetoacetoxy (meth)acrylamide, N-(acetoacetoxymethyl) (meth)acrylamide, and N-(acetoacetoxyethyl) (meth)acrylamide;
acetoacetylated ethylenically unsaturated monomers having a hydroxy group, such as 2-hydroxyethyl methacrylate, hydroxypropyl acrylate, 2-hydroxy-3-chloropropyl methacrylate, 1,4-butylene glycol monoacrylate, 1,4-butylene glycolmonomethacrylate, N-methylol acrylamide, N-methylol methacrylamide, and hydroxystyrene; and
diacetone (meth)acrylamide, and the like.

Of these, diacetone (meth)acrylamide and acetoacetoxyethyl (meth)acrylate are preferred, acetoacetoxyethyl (meth)acrylate is more preferred, and acetoacetoxyethyl methacrylate is even more preferred, from the viewpoint of maintaining better fluidity of the modified polyolefin resin composition, further suppressing agglomeration, and further improving the water resistance of the modified polyolefin resin composition and the adhesion thereof to polyolefin substrates.
In the present invention, the compound having a polymerizable unsaturated group (C) may contain a biomass-derived (meth)acrylic monomer component. The term "biomass-derived (meth)acrylic monomer component" refers to a component composed of biomass-derived (meth)acrylic acid and an ester of a biomass-derived alkanol with either biomass-derived or non-biomass-derived (meth)acrylic acid. Examples of biomass-derived alkanols include alkanols

derived from plant-based materials such as biomass ethanol, palm oil, palm kernel oil, and coconut oil. In the case of a biomass-derived alkanol having three or more carbon atoms, the alkanol may be linear or branched.

In the present invention, the weight average molecular weight (Mw) of the compound having a polymerizable unsaturated group (C) is preferably 5000 or less, more preferably 2000 or less, and even more preferably 1000 or less, from the viewpoint of maintaining better fluidity of the modified polyolefin resin composition and further improving the workability thereof.

In the present invention, the weight average molecular weight (Mw) of the compound having a polymerizable unsaturated group (C) is preferably 100 or more, more preferably 150 or more, even more preferably 160 or more, from the viewpoint of maintaining better fluidity of the modified polyolefin resin composition and further improving the workability thereof.

In the present invention, the weight average molecular weight (Mw) of the compound having a polymerizable unsaturated group (C) is preferably 100 or more and 5000 or less, more preferably 150 or more and 2000 or less, and still more preferably 160 or more and 1000 or less, from the viewpoint of maintaining better fluidity of the modified polyolefin resin composition and further improving the workability thereof.

In the present invention, preferably, a compound having a polymerizable unsaturated group having an SP value of 9 or more is contained. The presence of a compound having a polymerizable unsaturated group having an SP value of 9 or more makes it possible to suppress an increase in viscosity during long-term storage and maintain better fluidity of the modified polyolefin resin composition. In the present specification, the SP value is determined by the Fedors method, and the unit of the SP value is $cal/cm^3$. The presence of a compound having a polymerizable unsaturated group (C) having an SP value of 9.2 or more is more preferred, and the presence of a compound having a polymerizable unsaturated group (C) having an SP value of 9.5 or more is even more preferred. In the present disclosure, the upper limit of the SP value is not particularly limited. However, from the viewpoint of water resistance of a cured coating film formed from the modified polyolefin resin composition, the upper limit of the SP value of the compound having a polymerizable unsaturated group (C) is 15 or less, for example. These compounds having a polymerizable unsaturated group (C) having an SP value of 9 or more may be used alone or in a combination of two or more. Further, a compound having a polymerizable unsaturated group having an SP value of 9 or less may also be used in a combination.

The modified polyolefin resin composition of the present invention may contain a coating film-forming resin other than the compound having a polymerizable unsaturated group (C). Examples of the coating film-forming resin include acrylic resin, polyester resin, alkyd resin, polyether resin, polyolefin resin, polyurethane resin, polycarbonate resin, melamine resin, epoxy resin, carbodiimide resin, and the like. These resins can be used alone or in a combination of two or more. The content of the coating film-forming resin is preferably 10 to 30 parts by mass per 100 parts by mass of the modified polyolefin resin composition.

A preferred aspect (hereinafter described as "aspect A") of the modified polyolefin resin composition of the present invention may be as follows:
a modified polyolefin resin composition containing an acid-modified polyolefin resin (A), a polyetheramine (B), and two or three "compounds having a polymerizable unsaturated group (C),"

wherein in the case of (a) in which two compounds having a polymerizable unsaturated group (C) are contained,

(a1) the two compounds having a polymerizable unsaturated group (C) comprise a compound having one polymerizable unsaturated group and one compound having two polymerizable unsaturated groups, or
(a2) the two compounds having a polymerizable unsaturated group (C) comprise two compounds having two polymerizable unsaturated groups; and

wherein in the case of (b) in which three compounds having a polymerizable unsaturated group (C) are contained, the three compounds having a polymerizable unsaturated group (C) comprise one compound having one polymerizable unsaturated group and two compounds having two polymerizable unsaturated groups.

In aspect A, the compound having one polymerizable unsaturated group is preferably as follows:

- a compound having a hydroxy group and one polymerizable unsaturated group;
- a compound having linear or branched alkyl group having 1 to 20 (1, 2, 3, 4, 5, 6, 7, 8, 9, 10, 11, 12, 13, 14, 15, 16, 17, 18, 19, or 20) carbon atoms and one polymerizable unsaturated group; or
- a compound having a unit having a carbonyl group represented by formula (1) or (2) and one polymerizable unsaturated group.

In aspect A, the compound having one polymerizable unsaturated group is more preferably as follows:

- a compound having a hydroxy group and one polymerizable unsaturated group;
- a compound having a linear or branched alkyl group having 1 to 10 (1, 2, 3, 4, 5, 6, 7, 8, 9, or 10) carbon atoms and one polymerizable unsaturated group; or
- a compound having a unit having a carbonyl group represented by formula (1) and one polymerizable unsaturated group.

In aspect A, the compound having two polymerizable unsaturated groups is preferably as follows:

- a compound having an alkyleneoxy group represented by formula 4 and two polymerizable unsaturated groups; or
- a compound having a hydroxy group and two polymerizable unsaturated groups.

In aspect A, the polymerizable unsaturated group is preferably at least one selected from the group consisting of an acryloyl group, a methacryloyl group, an acryloyloxy group, and a methacryloyloxy group, and more preferably an acryloyloxy group and/or a methacryloyloxy group.

Another preferred aspect (hereinafter described as "aspect B") of the modified polyolefin resin composition of the present invention may be as follows:

a modified polyolefin resin composition containing an acid-modified polyolefin resin (A), a polyetheramine (B), and a compound having a polymerizable unsaturated group (C),

wherein the compound having a polymerizable unsaturated group (C) is at least one compound selected from the group consisting of neopentyl glycol diacrylate, tripropylene glycol diacrylate, polypropylene glycol diacrylate, 2-ethylhexyl acrylate, 4-hydroxybutyl acrylate, 2-hydroxy-3-methacrylpropyl acrylate, and acetoacetoxyethyl methacrylate.

Polymerization Initiator

The modified polyolefin resin composition of the present invention may contain a polymerization initiator as long as the effects of the present invention are not impaired. Due to the presence of a polymerization initiator, the polymerization reaction of the polymerizable unsaturated group in the compound (C) can proceed, and a resin for forming a coating film can be formed. The use of a polymerization initiator can further improve the corrosion resistance and durability of the coating film.

The amount of polymerization initiator used is preferably 0.1 to 20 parts by mass, more preferably 1 to 10 parts by mass, and even more preferably 2 to 5 parts by mass, per 100 parts by mass of the modified polyolefin resin composition, from the viewpoint of increasing the curing speed of the coating film obtained from the modified polyolefin resin composition.

Usable polymerization initiators are polymerization initiators that can initiate the polymerization reaction of the polymerizable unsaturated group. Examples include photopolymerization initiators that generate radicals by light, thermal polymerization initiators that generate radicals by heat, and the like. These polymerization initiators can be used alone or in a combination of two or more.

Photopolymerization initiators are compounds that generate radicals or acids when irradiated with ultraviolet or visible light and initiate a chain polymerization reaction. Examples of photopolymerization initiators include acetophenone-based photopolymerization initiators, benzoin-based photopolymerization initiators, benzophenone-based photopolymerization initiators, thioxanthone-based photopolymerization initiators, acylphosphine oxide-based photopolymerization initiators, titanocene-based photopolymerization initiators, and the like. These photopolymerization initiators can be used alone or in a combination of two or more.

Specific examples of acetophenone-based photopolymerization initiators include diethoxyacetophenone, 2-hydroxy-2-methyl-1-phenyl-propan-1-one, benzyldimethylketal, 4-(2-hydroxyethoxy)phenyl-(2-hydroxy-2-propyl)ketone, 1-hydroxycyclohexylphenylketone, 2-methyl-2-morpholino(4-thiomethylphenyl)propan-1-one, 2-benzyl-2-dimethylamino-1-(4-morpholinophenyl)butanone, 2-hydroxy-2-methyl-1-[4-(1-methylvinyl)phenyl]propanone oligomer, and the like. These can be used alone or in a combination of two or more.

Specific examples of benzoin-based photopolymerization initiators include benzoin methyl ether, benzoin ethyl ether, benzoin propyl ether, benzoin isopropyl ether, benzoin isobutyl ether, and the like. These can be used alone or in a combination of two or more.

Specific examples of benzophenone-based photopolymerization initiators include benzophenone, benzoylbenzoic acid, polyvinylbenzophenone, $\alpha$-hydroxycyclohexyl phenyl ketone, and the like. These can be used alone or in a combination of two or more.

Specific examples of thioxanthone-based photopolymerization initiators include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, isopropylthioxanthone, 2,4-diisopropylthioxanthone, dodecylthioxanthone, and the like. These can be used alone or in a combination of two or more.

Specific examples of acylphosphine oxide-based photopolymerization initiators include bis(2,4,6-trimethylbenzoyl)-phenyl-phosphine oxide, ethoxyphenyl(2,4,6-trimethylbenzoyl)phosphine oxide, and the like. These can be used alone or in a combination of two or more.

Specific examples of titanocene-based photopolymerization initiators include:

bis(cyclopentadienyl)-bis[2,6-difluoro-3-(2-(1-pyr-1-yl)ethyl)phenyl]titanium,
bis(cyclopentadienyl)-bis[2,6-difluoro-3-(3-(1-pyr-1-yl)propyl)phenyl]titanium,
bis(cyclopentadienyl)-bis[2,6-difluoro-3-((1-pyr-1-yl)methyl)phenyl]titanium,
bis(methylcyclopentadienyl)-bis[2,6-difluoro-3-((1-pyr-1-yl)methyl)phenyl]titanium,
bis(cyclopentadienyl)-bis[2,6-difluoro-3-((2,5-dimethyl-1-pyr-1-yl)methyl)phenyl]titanium,
bis(cyclopentadienyl)-bis[2,6-difluoro-3-((2-isopropyl-5-methyl-1-pyr-1,6-yl)methyl)phenyl]titanium,
bis(cyclopentadienyl)-bis[2,6-difluoro-3-((2-(2-methoxyethyl)-5-methyl-1-pyr-1-yl)methyl)phenyl]titanium, and the like. These can be used alone or in a combination of two or more.

Thermal polymerization initiators are compounds that generate radicals by heating and initiate a chain polymerization reaction. Examples of thermal polymerization initiators include organic peroxides; inorganic peroxides, such as potassium persulfate, ammonium persulfate, and hydrogen peroxide; and the like. Specific examples of organic peroxides include:

ketone peroxide compounds, such as methyl ethyl ketone peroxide, cyclohexanone peroxide, 3,3,5-trimethylcyclohexanone peroxide, methylcyclohexanone peroxide, methyl acetoacetate peroxide, and acetylacetone peroxide;
peroxyketal compounds, such as 1,1-bis(t-butylperoxy)-3,3,5-trimethylcyclohexane, 1,1-bis(t-butylperoxy)cyclohexane, 2,2-bis(t-butylperoxy)octane, n-butyl-4,4-bis(t-butylperoxy)valerate, and 2,2-bis(t-butylperoxy)butane;
hydroperoxide compounds, such as t-butyl hydroperoxide, cumene hydroperoxide, diisopropylbenzene hydroperoxide, p-menthane hydroperoxide, 2,5-dimethylhexane-2,5-dihydroperoxide, and 1,1,3,3-tetramethylbutyl hydroperoxide;
dialkyl peroxide compounds, such as t-butyl peroxide, t-butylcumyl peroxide, dicumyl peroxide, $\alpha,\alpha'$-bis(t-butylperoxy-m-isopropyl)benzene, 2,5-dimethyl-2,5-di(t-butylperoxy)hexane, and 2,5-dimethyl-2,5-di(t-butylperoxy)hexyne-3;
diacyl peroxide compounds, such as acetyl peroxide, isobutyryl peroxide, octanoyl peroxide, decanoyl peroxide, lauroyl peroxide, 3,5,5-trimethylhexanoyl peroxide, succinic acid peroxide, benzoyl peroxide, 2,4-dichlorobenzoyl peroxide, and m-toluoyl peroxide;
peroxydicarbonate compounds, such as diisopropyl peroxydicarbonate, di-2-ethylhexyl peroxydicarbonate, di-n-propyl peroxydicarbonate, bis-(4-t-butylcyclohexyl)peroxydicarbonate, dimyristyl peroxydicarbonate, di-2-ethoxyethyl peroxydicarbonate, dimethoxyisopropylperoxydicarbonate, di(3-methyl-3-methoxybutyl)peroxydicarbonate, and diallyl peroxydicarbonate; peroxyester compounds, such as t-butyl peroxyacetate, t-butyl peroxyisobutyrate, t-butyl peroxypivalate, t-butyl peroxyneodecanoate, cumyl peroxyneodecanoate, t-butyl peroxy-2-ethylhexanoate, t-butyl peroxy-3,5,5-trimethylhexanoate, t-butyl peroxylaurate, t-butyl peroxybenzoate, di-t-butyl peroxyisophthalate, 2,5-dimethyl-2,5-di(benzoylperoxy)hexane, t-butyl peroxymaleic acid, t-butyl peroxyisopropylcarbonate, cumyl peroxyoctoate, t-hexyl peroxyneodecanoate, t-hexyl peroxypivalate, t-butyl peroxyneohexanoate, t-hexyl peroxyneohexanoate, and cumyl peroxyneohexanoate;
acetyl cyclohexylsulfonyl peroxide, t-butyl peroxyallyl carbonate, and the like. These organic peroxides can be used alone or in a combination of two or more.

Ultraviolet Absorber

The modified polyolefin composition of the present invention may contain an ultraviolet absorber as long as the effects of the present invention are not impaired. Examples of ultraviolet absorbers include benzophenone-based ultraviolet absorbers, benzotriazole-based ultraviolet absorbers, triazine-based ultraviolet absorbers, salicylic acid-based ultraviolet absorbers, cyanoacrylate-based ultraviolet absorbers, benzoxazine-based ultraviolet absorbers, and the like. These ultraviolet absorbers can be used alone or in a combination of two or more.

The amount of ultraviolet absorber used is preferably 0.01 to 10 parts by mass, and more preferably 0.1 to 5 parts by mass, per 100 parts by mass of the modified polyolefin resin composition.

Light Stabilizer

The modified polyolefin composition of the present invention may contain a light stabilizer as long as the effects of the present invention are not impaired. Examples of light stabilizers include hindered amine-based light stabilizers.

Specific examples of hindered amine-based light stabilizers include bis(1,2,2,6,6-pentamethyl-4-piperidinyl) sebacate, methyl(1,2,2,6,6-pentamethyl-4-piperidinyl) sebacate, 2,4-bis[N-butyl-N-(1-cyclohexyloxy-2,2,6,6-tetramethylpiperidin-4-yl)amino]-6-(2-hydroxyethylamine)-1,3,5-triazine, decanedioic acid bis(2,2,6,6-tetramethyl-1-(octyloxy)-4-piperidinyl) ester, and the like. These can be used alone or in a combination of two or more.

The amount of light stabilizer used is preferably 0.01 to 10, and more preferably 0.1 to 1 part by mass, per 100 parts by mass of the modified polyolefin resin composition.

Sensitizer

The modified polyolefin composition of the present invention may contain a sensitizer as long as the effects of the present invention are not impaired. Examples of sensitizers include unsaturated ketone compounds, such as chalcone and dibenzalacetone; 1,2-diketone compounds, such as benzyl and camphorquinone; benzoin compounds, fluorene compounds, naphthoquinone compounds, anthraquinone compounds, xanthene compounds, thioxanthene compounds, xanthone compounds, thioxanthone compounds, coumarin compounds, ketocoumarin compounds; polymethine dyes, such as cyanine compounds, merocyanine compounds, and oxonol compounds; acridine compounds, azine compounds, thiazine compounds, oxazine compounds, indoline compounds, azulene compounds, azulenium compounds, squarylium compounds, porphyrin compounds, tetraphenylporphyrin compounds, triarylmethane compounds, tetrabenzoporphyrin compounds, tetrapyrazinoporphyrazine compounds, phthalocyanine compounds, tetraazaporphyrazine compounds, tetraquinoxalyloporphyrazine compounds, naphthalocyanine compounds, subphthalocyanine compounds, pyrylium compounds, thiopyrylium compounds, tetraphyrin compounds, annulene compounds, spiropyran compounds, spirooxazine compounds, thiospiropyran compounds, metal arene complexes, organic ruthenium complexes, Michler's ketone compounds, biimidazole compounds, and the like. These can be used alone or in a combination of two or more.

The amount of sensitizer used is preferably 0.01 to 10 parts by mass, and more preferably 0.1 to 5 parts by mass, per 100 parts by mass of the modified polyolefin resin composition.

Surfactant

The modified polyolefin resin composition according to the present invention may contain a surfactant as long as the effects of the present invention are not impaired. Examples of surfactants include nonionic surfactants, anionic surfactants, cationic surfactants, amphoteric surfactants, and the like. These surfactants can be used alone or in a combination of two or more. Of these, it is preferable to use a nonionic surfactant or an anionic surfactant, and more preferable to use a nonionic surfactant, in terms of further improving the stability of the modified polyolefin resin composition and the water resistance of the coating film obtained from the modified polyolefin resin composition.

Examples of nonionic surfactants include polyoxyethylene alkyl ethers, polyoxypropylene alkyl ethers, polyoxyethylene alkyl phenyl ethers, polyoxypropylene alkyl phenyl ethers, polyoxyethylene styrenated phenyl ethers, polyoxypropylene styrenated phenyl ethers, polyoxyethylene fatty acid esters, polyoxypropylene fatty acid esters, polyoxyethylene sorbitan fatty acid esters, polyoxypropylene sorbitan fatty acid esters, polyoxyethylene alkylamine ethers, polyoxypropylene alkylamine ethers, polyoxyethylene lanolin alcohol ethers, polyoxypropylene lanolin alcohol ethers, polyoxyethylene lanolin fatty acid esters, polyoxypropylene lanolin fatty acid esters, and (polyoxyethylene oxypropylene) block copolymers. These can be used alone or in a combination of two or more. As nonionic surfactants, known commercial products can be widely used, and examples include the Emulmin series (manufactured by Sanyo Chemical Industries, Ltd.), the Noigen series (manufactured by DKS Co., Ltd.), and the Blaunon series (manufactured by Aoki Oil Industrial Co., Ltd.).

Examples of anionic surfactants include higher alkyl sulfuric ester salts, alkylaryl polyoxyethylene sulfuric ester salts, higher fatty acid salts, alkylaryl sulfonic acid salts, and alkyl phosphoric ester salts. These can be used alone or in a combination of two or more. As anionic surfactants, known commercial products can be widely used, and examples include the Neocol series (manufactured by DKS Co. Ltd.) and the Hitenol series (manufactured by DKS Co. Ltd.).

The amount of surfactant used is preferably 1 to 60 parts by mass, more preferably 3 to 40 parts by mass, and even more preferably 5 to 30 parts by mass, per 100 parts by mass of the acid-modified polyolefin resin (A), from the viewpoint of further improving the stability of the modified polyolefin resin composition and the water resistance of the coating film obtained from the modified polyolefin resin composition.

Various Additives

The modified polyolefin resin composition of the present invention may contain various additives, as necessary. Examples of such various additives include tackifiers, film-forming aids, antifoaming agents, anti-sagging agents, wetting agents, and the like.

Examples of tackifiers include rosin, dammar, polymerized rosin, hydrogenated rosin, ester rosin, rosin-modified

maleic acid resin, polyterpene resin, petroleum resin, cyclopentadiene resin, phenol resin, xylene resin, coumarone-indene resin, and the like. These can be used alone or in a combination of two or more.

The amount of tackifier used is preferably 1 to 50 parts by mass, and more preferably 10 to 25 parts by mass, per 100 parts by mass of the modified polyolefin resin composition.

Organic Solvent

The modified polyolefin resin composition of the present invention may contain or may not contain an organic solvent.

When the present invention contains an organic solvent, the present invention preferably contains a small amount of organic solvent, in terms of environmental and hygiene aspects. In that case, the amount of organic solvent used is preferably 20 parts by mass or less, more preferably 10 parts by mass or less, even more preferably 5 parts by mass or less, still more preferably 3 parts by mass or less, and particularly preferably 1 part by mass or less, per 100 parts by mass of the modified polyolefin resin composition. When the present invention contains an organic solvent, the viscosity of the modified polyolefin resin composition is further reduced, which has the advantage of improving coating properties.

When the present invention does not contain an organic solvent, the present invention can be suitably used as the main agent of a solvent-free two-component curing polyurethane binder. In the present specification, "solvent-free" means that an organic solvent is not intentionally added to the modified polyolefin resin composition of the present invention. An embodiment in which the organic solvent used in the production of the acid-modified polyolefin resin (A) remains falls under the category of "solvent-free."

Examples of organic solvents include aromatic hydrocarbons, such as benzene, toluene, and xylene; aliphatic hydrocarbons, such as hexane, heptane, octane, and decane; alicyclic hydrocarbons, such as cyclohexane, cyclohexene, methylcyclohexane, and ethylcyclohexane; halogenated hydrocarbons, such as trichloroethylene, dichloroethylene, chlorobenzene, and chloroform; alcohol-based solvents, such as methanol, ethanol, isopropyl alcohol, butanol, pentanol, 1-hexanol, 2-ethylhexanol, 2-methylcyclohexanol, phenol, and 2-heptyl alcohol; ketone-based solvents, such as acetone, methyl isobutyl ketone, methyl ethyl ketone, pentanone, hexanone, cyclohexanone, isophorone, and acetophenone; cellosolve-based solvents, such as methyl cellosolve and ethyl cellosolve; ester-based solvents, such as methyl acetate, ethyl acetate, butyl acetate, methyl propionate, ethyl propionate, and butyl formate; and ether-based solvents, such as ethylene glycol mono-n-butyl ether, ethylene glycol mono-iso-butyl ether, ethylene glycol mono-tert-butyl ether, diethylene glycol mono-n-butyl ether, diethylene glycol mono-iso-butyl ether, triethylene glycol mono-n-butyl ether, tetraethylene glycol mono-n-butyl ether, dibenzyl ether, diphenyl ether, and butylphenyl ether. These can be used alone or in a combination of two or more.

Method for Producing Modified Polyolefin Resin Composition

As the method for producing a modified polyolefin resin composition of the present invention, known methods can be widely used. For example, the method described in the following steps (1) to (3) can be used.

Step (1): The acid-modified polyolefin resin (A) and the compound having a polymerizable unsaturated group (C) are placed in a stirrer equipped with a heating device and kneaded while heating.
Step (2): The polyetheramine (B) is further added to the stirrer and kneaded while heating.
Step (3): Thereafter, the mixture is cooled to room temperature and filtered to obtain a modified polyolefin resin composition.

In step (1), the heating temperature during kneading is generally 50 to 200°C, preferably 60°C to 150°C, and more preferably 70°C to 120°C. The kneading time varies depending on the heating temperature etc., but is generally 10 minutes to 120 minutes, preferably 15 minutes to 90 minutes, and more preferably 20 minutes to 60 minutes.

In step (2), the heating temperature during kneading is generally 50 to 200°C, preferably 60°C to 150°C, and more preferably 70°C to 120°C. The kneading time varies depending on the heating temperature etc., but is generally 10 minutes to 120 minutes, preferably 15 minutes to 90 minutes, and more preferably 20 minutes to 75 minutes.

In step (3), filtration can be carried out using, for example, a wire mesh with an opening of 50 μm to 300 μm.

The present invention is a cured product obtained by curing a modified polyolefin resin composition. In other words, the cured product is a product obtained by curing the modified polyolefin resin composition of the present invention. Hereinafter, the cured product is simply referred to as "the cured product of the present invention."

Use of the Present Invention

The modified polyolefin resin composition of the present invention and the cured product of the present invention

can be suitably used for polyolefin substrates. Examples of polyolefin substrates include blocks (plates, rods, spheres, etc.), sheets, films, threads, and fabrics (woven fabrics, knitted fabrics, nonwoven fabrics, etc.) processed from polyolefins. Of these polyolefin substrates, sheets and films are preferred from the viewpoint of production. The film thickness may be 5 μm to 100 μm. Examples of polyolefins include polypropylene, polyethylene, ethylene-propylene copolymers, ethylene-propylene-diene copolymers, polybutene, poly(4-methyl-1-pentene), and the like. The modified polyolefin resin composition of the present invention and the cured product of the present invention can be particularly suitably used for polypropylene substrates.

The modified polyolefin resin composition of the present invention and the cured product of the present invention can be suitably applied to paints for molded articles, inks, adhesives, sealants, primers, coating agents, in-mold coating paints, and the like. The modified polyolefin resin composition of the present invention and the cured product of the present invention can be particularly suitably used for inks for polyolefin substrates, adhesives for polyolefin substrates, primers for polyolefin substrates, paints for polyolefin substrates, and in-mold coating paints for polyolefin substrates.

A coating film can be obtained from the modified polyolefin resin composition of the present invention. The coating film can be particularly suitably used for metal products, electronic devices, packaging materials, automotive parts, and the like.

The method for producing a coating film from the modified polyolefin resin composition of the present invention is, for example, a method in which the modified polyolefin resin composition of the present invention is uniformly applied to the surface of various substrates and subjected to heat treatment (e.g., baking treatment). As a result, a uniform coating film can be formed on various substrate surfaces. Examples of the coating method include gravure coating, curtain flow coating, Mayer bar coating, dip coating, brush coating, roll coating, spray coating, and the like. The amount of the modified polyolefin resin composition applied to the substrate is not particularly limited, and is appropriately selected depending on the application. It is preferable that the thickness of the dry coating film is within the range of 1 μm to 100 μm. The heat treatment can be carried out using a hot-air circulation oven, an infrared heater, or the like. Another method is to mold a plastic substrate in a mold, inject the modified polyolefin resin composition of the present invention between the mold and the substrate, and then apply heat and pressure to form a coating film. The heating temperature is generally 60 to 200°C. The heating time is generally 15 seconds to 20 minutes.

The present invention provides inventions according to the following aspects.

Item 1. A modified polyolefin resin composition comprising an acid-modified polyolefin resin (A), a polyetheramine (B), and a compound having a polymerizable unsaturated group (C).

Item 2. The modified polyolefin resin composition according to Item 1, wherein the acid-modified polyolefin resin (A) is contained in an amount of generally 5 to 120 parts by mass, preferably 10 to 90 parts by mass, more preferably 12.5 to 70 parts by mass, even more preferably 15 to 50 parts by mass, still more preferably 17.5 to 40 parts by mass, and particularly preferably 20 to 35 parts by mass, per 100 parts by mass of the compound having a polymerizable unsaturated group (C).

Item 3. The modified polyolefin resin composition according to Item 1 or 2, wherein the compound having a polymerizable unsaturated group (C) preferably comprises a compound having a hydroxy group and one or more polymerizable unsaturated groups, more preferably a compound having a hydroxy group and one to four (one, two, three, or four) polymerizable unsaturated groups, even more preferably a compound having a hydroxy group and one or two polymerizable unsaturated groups.

Item 4. The modified polyolefin resin composition according to any one of Items 1 to 3, wherein the compound having a polymerizable unsaturated group (C) preferably comprises

a compound having an alkyleneoxy group and/or a linear or branched alkyl group having 1 to 20 (1, 2, 3, 4, 5, 6, 7, 8, 9, 10, 11, 12, 13, 14, 15, 16, 17, 18, 19, or 20) carbon atoms and one or more polymerizable unsaturated groups, more preferably a compound having an alkyleneoxy group and/or a linear or branched alkyl group having 1 to 20 carbon atoms and one or more polymerizable unsaturated groups, even more preferably a compound having an alkyleneoxy group and/or a linear or branched alkyl group having 1 to 20 (1, 2, 3, 4, 5, 6, 7, 8, 9, 10, 11, 12, 13, 14, 15, 16, 17, 18, 19, or 20) carbon atoms and one to four (one, two, three, or four) polymerizable unsaturated groups, and still more preferably a compound having an alkyleneoxy group and/or a linear or branched alkyl group having 1 to 20 (1, 2, 3, 4, 5, 6, 7, 8, 9, 10, 11, 12, 13, 14, 15, 16, 17, 18, 19, or 20) carbon atoms and one or two polymerizable unsaturated groups.

Item 5. The modified polyolefin resin composition according to any one of Items 1 to 4, wherein the polyetheramine (B) is contained in an amount of generally 6 to 100 parts by mass, preferably 10 to 90 parts by mass, more preferably 15 to 80 parts by mass, even more preferably 20 to 70 parts by mass, still more preferably 25 to 60 parts by mass, and particularly preferably 30 to 50 parts by mass, per 100 parts by mass of the acid-modified polyolefin resin (A).

Item 6. The modified polyolefin resin composition according to any one of Items 1 to 5, wherein the polyetheramine (B) has a polyether chain, and the polyether chain has a structure comprising at least one selected from the group

consisting of:

a structure represented by $-(O-CH_2CH_2)x-$, wherein x is an integer from 2 to 120,
a structure represented by $-(O-CH_2CH(CH_3))y_1-$, wherein $y_1$ is an integer from 2 to 90,
a structure represented by $-(O-CH_2CH_2CH_2)y_2-$, wherein $y_2$ is an integer from 2 to 90,
a structure represented by $-(O-CH_2CH_2CH_2CH_2)z_1-$, wherein $z_1$ is an integer from 2 to 80,
a structure represented by $-(O-CH(CH_3)CH_2CH_2)z_2-$, wherein $z_2$ is an integer from 2 to 80,
a structure represented by $-(O-CH_2CH(CH_3)CH_2)z_3-$, wherein $z_3$ is an integer from 2 to 80, and
a structure represented by $-(O-CH_2CH_2CH(CH_3))z_4-$, wherein $z_4$ is an integer from 2 to 80.

Item 7. The modified polyolefin resin composition according to any one of Items 1 to 7,

wherein the polyetheramine (B) preferably has a primary amino group or a secondary amino group at one end thereof and has a weight average molecular weight (Mw) of 200 to 50000,
the polyetheramine (B) more preferably has a primary amino group or a secondary amino group at one end thereof and has a weight average molecular weight (Mw) of 300 to 10000, and
the polyetheramine (B) even more preferably has a primary amino group or a secondary amino group at one end thereof and has a weight average molecular weight (Mw) of 500 to 5000.

Item 8. The modified polyolefin resin composition according to any one of Items 1 to 7, wherein the polyetheramine (B) has an HLB value of preferably 2 to 20, more preferably 5 to 19, and even more preferably 8 to 18.
Item 9. The modified polyolefin resin composition according to any one of Items 1 to 8, wherein the compound having a polymerizable unsaturated group (C) has a weight average molecular weight (Mw) of 5000 or less.
Item 10. The modified polyolefin resin composition according to any one of Items 1 to 9, wherein the compound having a polymerizable unsaturated group (C) comprises

a compound having a hydroxy group and one or more polymerizable unsaturated groups, and
a compound having an alkyleneoxy group and/or a linear or branched alkyl group having 1 to 20 carbon atoms and one or more polymerizable unsaturated groups.

Item 11. The modified polyolefin resin composition according to any one of Items 1 to 10, wherein the acid-modified polyolefin resin (A) is a graft polymer having a structure with an $\alpha,\beta$-unsaturated carboxylic acid and/or an acid anhydride thereof grafted to a polyolefin resin.
Item 12. The modified polyolefin resin composition according to Item 11, wherein the polyolefin resin is as follows:

- preferably at least one copolymer selected from the group consisting of homopolypropylene, a propylene-$\alpha$-olefin copolymer, homopolyethylene, an ethylene-$\alpha$-olefin copolymer, poly-1-butene, and a 1-butene-$\alpha$-olefin copolymer,
- more preferably homopolypropylene and/or a propylene-$\alpha$-olefin copolymer, and
- even more preferably homopolypropylene or a propylene-$\alpha$-olefin copolymer.

Item 13. The modified polyolefin resin composition according to any one of Items 1 to 12, wherein the content ratio of the acid-modified polyolefin resin (A) to the total mass of the modified polyolefin resin composition is preferably 1 to 60 mass%, more preferably 4 to 50 mass%, even more preferably 7 to 40 mass%, still more preferably 10 to 35 mass%, and particularly preferably 15 to 30 mass%.
Item 14. The modified polyolefin resin composition according to any one of Items 1 to 13, wherein the polyetheramine (B) has a polyether chain, and the polyether chain has a structure comprising at least one selected from the group consisting of:

a structure represented by formula 1: $-(O-CH_2CH_2)x-$, wherein x is an integer from 2 to 120,
a structure represented by formula 2-1: $-(O-CH_2CH(CH_3))y_1-$, wherein $y_1$ is an integer from 2 to 90, and
a structure represented by formula 3-1: $-(O-CH_2CH_2CH_2CH_2)z_1-$, wherein $z_1$ is an integer from 2 to 80.

Item 15. The modified polyolefin resin composition according to any one of Items 1 to 14, wherein the polyetheramine (B) is a compound represented by the following formula 1A:

$$R^1-(O-R^2)a-R^3 \qquad \text{Formula 1A}$$

wherein $R^1$ and $R^3$ each independently represent an amino group or a linear or branched alkyl group having 1 to 10 (1, 2, 3,

4, 5, 6, 7, 8, 9 or 10) carbon atoms and optionally having an amino group, $R^2$ represents a linear or branched alkylene group having 2 to 4 carbon atoms, and a is an integer from 1 to 120.

Item 16. The modified polyolefin resin composition according to Item 15, wherein in formula 1A, $R^1$ represents a linear or branched alkyl group having 1 to 10 (1, 2, 3, 4, 5, 6, 7, 8, 9, or 10) carbon atoms, $R^2$ represents a linear or branched alkylene group having 2 to 4 carbon atoms, $R^3$ represents an amino group, and a is an integer from 1 to 120.

Item 17. The modified polyolefin resin composition according to any one of Items 1 to 16, wherein the content ratio of the polyetheramine (B) to the total mass of the modified polyolefin resin composition is generally 0.5 to 40 mass%, preferably 1 to 30 mass%, more preferably 2 to 20 mass%, even more preferably 3 to 15 mass%, still more preferably 4 to 12.5 mass%, and particularly preferably 5 to 10 mass%.

Item 18. The modified polyolefin resin composition according to any one of Items 1 to 17, wherein the compound having a polymerizable unsaturated group (C) has a weight average molecular weight (Mw) or preferably 100 or more and 5000 or less, more preferably 150 or more and 2000 or less, and even more preferably 160 or more and 1000 or less.

Item 19. The modified polyolefin resin composition according to any one of Items 1 to 18, wherein two or three compounds having a polymerizable unsaturated group (C) are contained.

Item 20. The modified polyolefin resin composition according to Item 19,

wherein in the case of (a) in which two compounds having a polymerizable unsaturated group (C) are contained,

(a1) the two compounds having a polymerizable unsaturated group (C) comprise a compound having one polymerizable unsaturated group and one compound having two polymerizable unsaturated groups, or
(a2) the two compounds having a polymerizable unsaturated group (C) comprise two compounds having two polymerizable unsaturated groups; and

wherein in the case of (b) in which three compounds having a polymerizable unsaturated group (C) are contained, the three compounds having a polymerizable unsaturated group (C) comprise one compound having one polymerizable unsaturated group and two compounds having two polymerizable unsaturated groups.

Item 21. The modified polyolefin resin composition according to any one of Items 3 to 20, wherein the number of the hydroxy groups is preferably one or two, and more preferably 1.

Item 22. The modified polyolefin resin composition according to any one of Items 1 to 21, wherein the content ratio of the compound having a polymerizable unsaturated group (C) to the total mass of the modified polyolefin resin composition is generally 10 to 90 mass%, preferably 20 to 85 mass%, more preferably 30 to 80 mass%, even more preferably 40 to 77 mass%, and particularly preferably 50 to 75 mass%.

Item 23. The modified polyolefin resin composition according to any one of Items 1 to 22, wherein the polymerizable unsaturated group is as follows:

- preferably at least one selected from the group consisting of an acryloyl group, a methacryloyl group, an acryloyloxy group, a methacryloyloxy group, a vinyl group, an allyl group, a propenyl group, an isopropenyl group, a maleimide group, and vinyl ether,
- more preferably at least one selected from the group consisting of an acryloyl group, a methacryloyl group, an acryloyloxy group, and a methacryloyloxy group, and
- even more preferably an acryloyloxy group and/or a methacryloyloxy group.

Item 24. The modified polyolefin resin composition according to any one of Items 1 to 23, wherein the total content ratio of the acid-modified polyolefin resin (A), the polyetheramine (B), and the compound having a polymerizable unsaturated group (C) to the total mass of the modified polyolefin resin composition is preferably in the order of 45 mass%, 50 mass%, more than 50 mass%, 55 mass% or more, 60 mass% or more, 65 mass% or more, 70 mass% or more, 75 mass% or more, 80 mass% or more, 85 mass% or more, 90 mass% or more, 92.5 mass% or more, 95 mass% or more, 97.5 mass% or more, 99 mass% or more, 99.5 mass% or more, 99.9 mass% or more, 99.95 mass% or more, and 99.99 mass% or more.

Item 25. A cured product obtained by curing the modified polyolefin resin composition of any one of Items 1 to 24.

Item 26. An ink comprising the modified polyolefin resin composition of any one of Items 1 to 24 or the cured product of Item 11.

Item 27. An adhesive comprising the modified polyolefin resin composition of any one of Items 1 to 24 or the cured product of Item 1.

Item 28. A primer comprising the modified polyolefin resin composition of any one of Items 1 to 24 or the cured product of Item 1.

Item 29. A paint comprising the modified polyolefin resin composition of any one of Items 1 to 24 or the cured

product of Item 1.

Item 30. An in-mold coating paint comprising the modified polyolefin resin composition of any one of Items 1 to 24 or the cured product of Item 1.

Examples

Next, the present invention is described in detail based on Examples; however, the present invention is not limited by the following Examples. Hereinafter, "room temperature" refers to a temperature within the range of 20°C to 25°C.

(1) Measurement of Weight Average Molecular Weight (Mw) by High-temperature GPC

The measurement was performed by using orthodichlorobenzene as a solvent at 140°C with a GPC150-C Plus (manufactured by Waters Corporation; column: GMH6-HT + GMH6-HTL manufactured by Tosoh Corporation). The weight average molecular weight (Mw) was calculated based on polystyrene of known molecular weight as the standard substance.

(2) Measurement of Melting Point by Differential Scanning Calorimeter (DSC)

In accordance with JIS K7121-2012, with a DSC meter (manufactured by Seiko Instruments Inc.), about 5 mg of a sample was maintained in a heated and melted state at 150°C for 10 minutes and then cooled at a rate of 10°C/minute until the sample was stabilized and maintained at -50°C. The sample was further heated at a rate of 10°C/minute to 150°C, and the peak melting temperature at which the sample was melted was measured and evaluated as the melting point.

(3) Measurement of Tensile Modulus (MPa)

The modified polyolefin resin compositions shown in the Production Examples below were each dissolved in toluene to obtain a solution. The resulting solution was applied to a Teflon (registered trademark) sheet to a film thickness of about 50 μm, and the toluene was dried to obtain a dry coating film. The coating film was cut into a test piece having a width of 10 mm and a length of 70 mm. The tensile modulus of the resulting test piece was measured using a tensile tester (Tensilon RTM-100, manufactured by Orientec Corporation) with a chuck distance of 50 mm.

Production Example 1

280 g of a propylene-α-olefin copolymer (propylene content: 70 mol%), 62 g of maleic anhydride, 7 g of dicumyl peroxide, and 420 g of toluene were added to an autoclave equipped with a stirrer, which was then purged with nitrogen for about 5 minutes. Thereafter, a reaction was performed at 140°C for 5 hours with heating and stirring. After the reaction was completed, the reaction solution was poured into a large amount of methyl ethyl ketone to precipitate a resin. The resin was further washed with methyl ethyl ketone several times to remove unreacted maleic anhydride. The resulting resin was dried under reduced pressure to obtain a solid of acid-modified polyolefin resin (MPO-1). The results of infrared absorption spectroscopy indicated that the acid value of the maleic anhydride component and maleic acid component in MPO-1 was 22.4 mgKOH/g. The weight average molecular weight (Mw) of MPO-1 measured by high-temperature GPC was 70000, and the melting point measured by DSC was 70°C. Furthermore, the tensile modulus of MPO-1 was 190 MPa.

Production Example 2

280 g of a propylene homopolymer (homopolypropylene, propylene content: 100 mol%), 36 g of maleic anhydride, 5.6 g of dicumyl peroxide, and 420 g of toluene were placed in an autoclave equipped with a stirrer, which was then purged with nitrogen for about 5 minutes. Thereafter, a reaction was performed at 140°C for 5 hours with heating and stirring. After the reaction was completed, the reaction solution was poured into a large amount of methyl ethyl ketone to precipitate a resin. The resin was further washed with methyl ethyl ketone several times to remove unreacted maleic anhydride. The resulting resin was dried under reduced pressure to obtain a solid of acid-modified polyolefin resin (MPO-2). The results of infrared absorption spectroscopy indicated that the acid value of the maleic anhydride component and maleic acid component in MPO-2 was 20.2 mgKOH/g. The weight average molecular weight (Mw) of MPO-2 measured by high-temperature GPC was 40000, and the melting point measured by DSC was 75°C. Furthermore, the tensile modulus of MPO-2 was 130 MPa.

Production Example 3

280 g of a propylene-α-olefin copolymer (propylene content: 94 mol%), 14 g of maleic anhydride, 5.6 g of dicumyl peroxide, and 420 g of toluene were placed in an autoclave equipped with a stirrer, which was then purged with nitrogen for about 5 minutes. Thereafter, a reaction was performed at 140°C for 5 hours with heating and stirring. After the reaction was completed, the reaction solution was poured into a large amount of methyl ethyl ketone to precipitate a resin. The resin was further washed with methyl ethyl ketone several times to remove unreacted maleic anhydride. After drying under reduced pressure, 280 g of the resulting maleic anhydride-modified polyolefin resin and 2520 g of chloroform were placed in an autoclave equipped with a stirrer, which was then purged with nitrogen for about 5 minutes. Thereafter, the autoclave was heated to 110°C to fully dissolve the resin. Subsequently, 1.4 g of tert-butylperoxy-2-ethylhexanoate was added, and a predetermined amount of chlorine gas was blown into the autoclave. The reaction solvent, chloroform, was distilled off under reduced pressure, and the residue was dried, thereby obtaining a solid of acid-modified chlorinated polyolefin resin (CPO-1). The weight average molecular weight (Mw) of CPO-1 measured by high-temperature GPC was 80000, and the melting point measured by DSC was 75°C. Further, the chlorine content of CPO-1 was 21 mass%, and the acid value of the maleic anhydride component was 16.8 mgKOH/g. Furthermore, the tensile modulus of CPO-1 was 18 MPa.

Materials Used

The materials used in the Examples and Comparative Examples are as follows.

Acid-modified polyolefin resin (A)

- MPO-1 obtained in Production Example 1 (total content of maleic anhydride component and maleic acid component = 2.0 mass%, Mw measured by high-temperature GPC = 70000, melting point measured by DSC = 70°C)
- MPO-2 obtained in Production Example 2 (total content of maleic anhydride component and maleic acid component = 1.8 mass%, Mw measured by high-temperature GPC = 40000, melting point measured by DSC = 75°C)
- CPO-1 obtained in Production Example 3 (chlorine content = 21 mass%, maleic anhydride component content = 1.5 mass%, Mw measured by high-temperature GPC = 80000, melting point measured by DSC = 75°C)

Polyetheramine (B)

- JEFFAMINE M-2070 (Mw = 2000, HLB value = 13.8) manufactured by Huntsman (number of primary amino groups = 1, number of secondary amino groups = 0)
- JEFFAMINE M-1000 (Mw = 1000, HLB value = 16.1) manufactured by Huntsman (number of primary amino groups = 1, number of secondary amino groups = 0)
- JEFFAMINE M-2005 (Mw = 2000, HLB value = 2.7) manufactured by Huntsman (number of primary amino groups = 1, number of secondary amino groups = 0)

Compound having a polymerizable unsaturated group (C)

Compound having an alkyleneoxy group and two polymerizable unsaturated groups

- Neopentyl glycol diacrylate (Mw = 212, SP value = 9.4) (manufactured by Tokyo Chemical Industry Co., Ltd.)
- Tripropylene glycol diacrylate (Mw = 300, SP value = 9.2) (manufactured by Tokyo Chemical Industry Co., Ltd.)
- Polypropylene glycol diacrylate (Polypropylene Glycol #700 Diacrylate, number of repeating units = 12, Mw = 808, SP value = 8.9, manufactured by Shin Nakamura Chemical Co., Ltd., NK Ester (registered trademark) APG-700)

Compound having a $C_8$ branched alkyl group and one polymerizable unsaturated group

- 2-Ethylhexyl acrylate (Mw = 184, SP value = 8.6) (manufactured by Tokyo Chemical Industry Co., Ltd.)

Compound having a hydroxyl group and one polymerizable unsaturated group

- 4-Hydroxybutyl acrylate (Mw = 144, SP value = 11.6) (manufactured by Tokyo Chemical Industry Co., Ltd.)

Compound having a hydroxyl group and two polymerizable unsaturated groups

- 2-Hydroxy-3-methacrylpropyl acrylate (Mw = 214, SP value = 12.2) (manufactured by Tokyo Chemical Industry Co., Ltd.) Compound having a unit having a carbonyl group represented by formula (1) and one polymerizable unsaturated group
- Acetoacetoxyethyl methacrylate (Mw = 214, SP value = 10) (manufactured by Tokyo Chemical Industry Co., Ltd.)

Example 1

In a 200 ml four-necked flask equipped with a condenser, a thermometer, and a stirrer, 20 g of MPO-1 as the acid-modified polyolefin resin (A), and 50 g of neopentyl glycol diacrylate and 30 g of 2-hydroxy-3-methacrylpropyl acrylate as the compounds having a polymerizable unsaturated group (C) were placed. Then, the internal temperature was raised to 90°C, and the mixture was dissolved by heating for 30 minutes. Thereafter, 8 g of JEFFAMINE M-2070 was added as the polyetheramine (B), followed by stirring at 90°C for 1 hour. Then, the mixture was cooled to room temperature and filtered through a wire mesh with an opening of 149 μm, thereby obtaining a modified polyolefin resin composition (a).

Examples 2 to 16

Modified polyolefin resin compositions (b) to (p) were obtained in the same manner as in Example 1, except that the amounts of the acid-modified polyolefin resin (A), polyetheramine (B), and compounds having a polymerizable unsaturated group (C) were changed as shown in Table 1 below.

Comparative Example 1

In a 200 ml four-necked flask equipped with a condenser, a thermometer, and a stirrer, 50 g of neopentyl glycol diacrylate and 30 g of 2-hydroxy-3-methacrylpropyl acrylate as the compounds having a polymerizable unsaturated group (C) were placed. Then, the internal temperature was raised to 90°C, and the mixture was dissolved by heating for 30 minutes. Thereafter, 8 g of JEFFAMINE M-2070 was added as the polyetheramine (B), followed by stirring at 90°C for 1 hour. Then, the mixture was cooled to room temperature and filtered through a wire mesh with an opening of 149 μm, thereby obtaining a resin composition (q). In Comparative Example 1, any acid-modified polyolefin resin (A) was not used.

Comparative Example 2

In a 200 ml four-necked flask equipped with a condenser, a thermometer, and a stirrer, 20 g of MPO-1 as the acid-modified polyolefin resin (A), and 50 g of neopentyl glycol diacrylate and 30 g of 2-hydroxy-3-methacrylpropyl acrylate as the compounds having a polymerizable unsaturated group (C) were placed. Then, the internal temperature was raised to 90°C, and the mixture was dissolved by heating for 30 minutes. Thereafter, the mixture was stirred at 90°C for 1 hour without adding the polyetheramine (B). Then, the mixture was cooled to room temperature; however, the resin precipitated, failing to obtain a modified polyolefin resin composition.

(1) Evaluation of Fluidity at -5°C and 80°C

The modified polyolefin resin compositions obtained in the Examples and the resin composition obtained in the Comparative Example were visually evaluated for fluidity at -5°C and 80°C immediately after production, fluidity at -5°C and 80°C the next day (24 hours after production), and fluidity at -5°C and 80°C after a week (168 hours after production). A composition with fluidity after a week was rated "A," a composition with fluidity the next day was rated "B," a composition with fluidity only immediately after production was rated "C," and a composition with no fluidity immediately after production was rated "D."

(2) Evaluation of Adhesion

0.15 g of tert-butyl-2-ethylperoxyhexanoate was added to 5 g of each of the modified polyolefin resin compositions obtained in the Examples and 5 g of the resin composition obtained in the Comparative Example, and the mixture was stirred with a magnetic stirrer at room temperature for 30 seconds. The mixture obtained by stirring was applied to a PP

(polypropylene) bumper substrate, which had been washed with isopropyl alcohol, at room temperature using a No. 16 bar coater so that the coating film after drying had a thickness of about 10 μm. After baking at 110°C for 10 minutes, the substrate was left to stand for 72 hours in an atmosphere of 25°C and 60% relative humidity to prepare a test plate. A grid of 100 squares was made on this test plate with 1 mm intervals, reaching down to the base. Cellophane tape was pressed onto the squares and then peeled off at an angle of 90 degrees relative to the coated surface. This operation was performed three times. A coating film with no peeling even after three tries was rated "A." A coating film that had peeled after the third try was rated "B." A coating film that had peeled after the first or second try was rated "C."

(3) Evaluation of Water Resistance

0.15 g of tert-butyl-2-ethylperoxyhexanoate was added to 5 g of each of the modified polyolefin resin compositions obtained in the Examples and 5 g of the resin composition obtained in the Comparative Example, and the mixture was stirred with a magnetic stirrer at room temperature for 30 seconds. The mixture obtained by stirring was applied to a PP (polypropylene) bumper substrate, which had been washed with isopropyl alcohol, at room temperature using a No. 16 bar coater so that the coating film after drying had a thickness of about 10 μm. After baking at 110°C for 10 minutes, the substrate was left to stand for 72 hours in an atmosphere of 25°C and 60% relative humidity to prepare a test plate. The obtained test plate was immersed in warm water at 40°C for 10 days (240 hours). A grid of 100 squares was made on the test plate after immersion with 1 mm intervals, reaching down to the base. Cellophane tape was pressed onto the squares and then peeled off at an angle of 90 degrees relative to the coated surface. This operation was performed three times. A coating film with no peeling even after three tries was rated "A." A coating film that had peeled after the third try was rated "B." A coating film that had peeled after the first or second try was rated "C."

Table 1 below shows the raw materials and their amounts used in the Examples and Comparative Examples, the evaluation results of the modified polyolefin resin compositions (a) to (p) obtained in Examples 1 to 16, the evaluation results of the resin composition (q) obtained in Comparative Example 1, and the like. For Comparative Example 2, in which no modified polyolefin resin composition was obtained, adhesion and water resistance were deemed "not evaluable."

Table 1-1

| | | Unit | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|
| Modified polyolefin resin composition | | - | (a) | (b) | (c) | (d) | (e) | (f) | (g) | (h) | (i) |
| Acid-modified polyolefin resin (A) | MPO-1 (Prod. Ex 1) | g | 20 | - | - | 5 | 20 | 20 | 20 | - | 20 |
| | MPO-2 (Prod. Ex. 2) | g | - | 20 | - | - | - | - | - | - | - |
| | CPO-1 (Prod. Ex. 3) | g | - | - | 20 | - | - | - | - | 20 | - |
| Polyetheramine (B) | JEFFAMINE M-2070 (MN= 2000, HLB value = 13.8) | g | 8 | 8 | 8 | 2 | 12 | 1 | 20 | - | - |
| | JEFFAMINE M-1000 (Mw = 1000, HLB value = 16.1) | 9 | - | - | - | - | - | - | - | 8 | - |
| | JEFFAMINE M-2005 (Mw = 2000, HLB value = 2.7) | 9 | - | - | - | - | - | - | - | - | 8 |
| | Number of primary amino groups | Number of groups | 1 | 1 | 1 | 1 | 1 | 1 | 1 | 1 | 1 |
| | Number of secondary amino groups | Number of groups | 0 | 0 | 0 | 0 | 0 | 0 | 0 | 0 | 0 |

(continued)

| | | | Unit | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|---|
| Modified polyolefin resin composition | | | - | (a) | (b) | (c) | (d) | (e) | (f) | (g) | (h) | (i) |
| Compound having polymerizable unsaturated group (C) | Compound having alkyleneoxy group and two polymerizable unsaturated groups | Neopentyl glycol diacrylate (Mw = 212, SP value = 9.4) | g | 50 | 50 | 50 | 50 | 10 | 50 | 50 | 50 | 50 |
| | | Tripropylene glycol diacrylate (Mw = 300, SP value = 9.2) | g | - | - | - | - | - | - | - | - | - |
| | | Polypropylene glycol diacrylate (number of repeating units = 12, Mw = 808, SP value = 8.9) | g | - | - | - | - | - | - | - | - | - |
| | Compound having $C_8$ branched alkyl group and one polymerizable unsaturated group | 2-Ethylhexyl acrylate (Mw = 184, SP value = 8.6) | g | - | - | - | - | - | - | - | - | - |
| | Compound having hydroxyl group and one polymerizable unsaturated group | 4-Hydroxybutyl acrylate (Mw = 144, SP value = 11.6) | g | - | - | - | - | - | - | - | - | - |
| | Compound having hydroxyl group and two polymerizable unsaturated groups | 2-Hydroxy-3-methacryipropyl acrylate (Mw = 214, SP value = 12.2) | g | 30 | 30 | 30 | 30 | 7 | 30 | 30 | 30 | 30 |
| | Compound having unit having carbonyl group represented by formula (1) and one polymerizable unsaturated group | Acetoacetoxyethyl methacrylate (Mw = 214, SP value = 10) | g | | | | | | | | | |
| Total mass of (A), (B), and (C) | | | a | 108 | 108 | 108 | 87 | 49 | 101 | 120 | 108 | 108 |
| Mass of (B) when (A) is 100 g | | | g | 40 | 40 | 40 | 40 | 60 | 5 | 100 | 40 | 40 |
| Mass of (A) when (C) is 100 g | | | g | 25 | 25 | 25 | 63 | 118 | 25 | 25 | 25 | 25 |
| Evaluation results | Fluidity at -5°C | | - | A | A | A | A | C | C | 25 | 25 | 25 |
| | Fluidity at 80°C | | - | A | A | A | A | A | A | A | A | A |
| | Adhesion | | - | A | A | A | B | A | A | A | A | A |
| | Water resistance | | - | A | A | A | B | A | A | B | A | A |

Table 1-2

| | | Unit | Ex. 10 | Ex 11 | Ex 12 | Ex. 13 | Ex 14 | Ex. 15 | Ex. 16 | Comp. Ex. 1 | Comp. Ex. 2 |
|---|---|---|---|---|---|---|---|---|---|---|---|
| Modified polyolefin resin composition | | - | (j) | (k) | (l) | (m) | (n) | (o) | (p) | (q) | - |
| Acid-modified polyolefin resin (A) | MPO-1 (Prod. Ex 1) | g | 20 | 20 | 20 | 20 | 20 | 20 | 20 | - | 20 |
| | MPO-2 (Prod. Ex. 2) | a | - | - | - | - | - | - | - | - | - |
| | CPO-1 (Prod. Ex. 3) | g | - | - | - | - | - | - | - | - | - |
| Polyetheramine (B) | JEFFAMINE M-2070 (Mw = 2000, HLB value = 13.8) | g | 8 | 8 | 8 | 8 | 8 | 8 | 8 | 8 | - |
| | JEFFAMINE M-1000 (Mw = 1000, HLB value = 16.1) | 9 | - | - | - | - | - | - | - | - | - |
| | JEFFAMINE M-2005 (Mw = 2000, HLB value = 2.7) | 9 | - | - | - | - | - | - | - | - | - |
| | Number of primary amino groups | Number of groups | 1 | 1 | 1 | 1 | 1 | 1 | 1 | 1 | - |
| | Number of secondary amino groups | Number of groups | 0 | 0 | 0 | 0 | 0 | 0 | 0 | 0 | - |

(continued)

| | | | Unit | Ex. 10 | Ex 11 | Ex 12 | Ex. 13 | Ex 14 | Ex. 15 | Ex. 16 | Comp. Ex. 1 | Comp. Ex. 2 |
|---|---|---|---|---|---|---|---|---|---|---|---|---|
| Modified polyolefin resin composition | | | - | (j) | (k) | (l) | (m) | (n) | (o) | (p) | (q) | - |
| Compound having polymerizable unsaturated group (C) | Compound having alkyleneoxy group and two polymerizable unsaturated groups | Neopentyl glycol diacrylate (Mw = 212, SP value = 9.4) | g | - | - | - | 50 | 25 | - | - | 50 | 50 |
| | | Tripropylene glycol diacrylate (Mw = 300, SP value = 9.2) | g | 50 | - | - | - | - | - | 50 | - | - |
| | | Polypropylene glycol diacrylate (number of repeating units = 12, Mw = 808, SP value = 8.9) | g | - | 50 | 65 | - | - | - | - | - | - |
| | Compound having $C_8$ branched alkyl group and one polymerizable unsaturated group | Mw, SP value 12, Mw = 808, SP value = 8.9) 2-Ethyihexyl acrylate (Mw = 184, SP value = 8.6) | g | - | - | - | - | 25 | 50 | - | - | - |
| | Compound having hydroxyl group and one polymerizable unsaturated aroup | 4-Hydroxybutyl acrylate (Mw = 144, SP value = 11.6) | g | - | | - | 30 | - | - | - | - | - |
| | Compound having hydroxyl group and two polymerizable unsaturated groups | 2-Hydroxy-3-methacrylpropyl acrylate (Mw = 214, SP value = 12.2) | g | 30 | 30 | 15 | - | 30 | 30 | | 30 | 30 |
| | Compound having unit having carbonyl group represented by formula (1) and one polymerizable unsaturated group | Acetoacetoxyethyl methacrylate (Mw = 214, SP value = 10) | g | | | | | | | 30 | | |
| Total mass of (A), (B), and (C) | | | a | 108 | 108 | 108 | 108 | 108 | 108 | 108 | 88 | 100 |
| Mass of (B) when (A) is 100 g | | | g | 40 | 40 | 40 | 40 | 40 | 40 | 40 | - | - |
| Mass of (A) when (C) is 100 a | | | a | 25 | 25 | 20 | 25 | 25 | 25 | 25 | - | 25 |

(continued)

| | | Unit | Ex. 10 | Ex 11 | Ex 12 | Ex. 13 | Ex 14 | Ex. 15 | Ex. 16 | Comp. Ex. 1 | Comp. Ex. 2 |
|---|---|---|---|---|---|---|---|---|---|---|---|
| Modified polyolefin resin composition | | - | (j) | (k) | (l) | (m) | (n) | (o) | (p) | (q) | - |
| Evaluation results | Fluidity at -5°C | - | A | A | A | B | A | B | A | A | D |
| | Fluidity at 80°C | - | A | A | A | A | A | A | A | A | D |
| | Adhesion | - | A | A | A | A | A | A | A | C | Not evaluable |
| | Water resistance | - | A | A | A | B | A | A | A | C | Not evaluable |

Discussion of Results in Table 1

It was shown that the modified polyolefin resin compositions (a) to (p) obtained in Examples 1 to 16 maintained fluidity immediately after production at both -5°C and 80°C. It was also shown that the modified polyolefin resin compositions (a) to (p) obtained in Examples 1 to 16 had sufficient adhesion to the PP (polypropylene) bumper substrates. It was further shown that the modified polyolefin resin compositions (a) to (p) obtained in Examples 1 to 16 had sufficient water resistance. On the other hand, the resin composition (q) obtained in Comparative Example 1, which did not use any modified polyolefin resin (A), had significantly inferior adhesion. In Comparative Example 2, since the polyetheramine (B) was not used, the resin precipitated, and it was not possible to produce a modified polyolefin resin composition itself.

## Claims

1. A modified polyolefin resin composition comprising an acid-modified polyolefin resin (A), a polyetheramine (B), and a compound having a polymerizable unsaturated group (C).

2. The modified polyolefin resin composition according to claim 1, wherein the acid-modified polyolefin resin (A) is contained in an amount of 5 to 120 parts by mass per 100 parts by mass of the compound having a polymerizable unsaturated group (C).

3. The modified polyolefin resin composition according to claim 1, wherein the compound having a polymerizable unsaturated group (C) comprises a compound having a hydroxy group and one or more polymerizable unsaturated groups.

4. The modified polyolefin resin composition according to claim 1, wherein the compound having a polymerizable unsaturated group (C) comprises a compound having an alkyleneoxy group and/or a linear or branched alkyl group having 1 to 20 carbon atoms and one or more polymerizable unsaturated groups.

5. The modified polyolefin resin composition according to claim 1, wherein the polyetheramine (B) is contained in an amount of 6 to 100 parts by mass per 100 parts by mass of the acid-modified polyolefin resin (A).

6. The modified polyolefin resin composition according to claim 1, wherein the polyetheramine (B) has a polyether chain, and the polyether chain has a structure comprising at least one selected from the group consisting of:

   a structure represented by $-(O-CH_2CH_2)x-$, wherein x is an integer from 2 to 120,
   a structure represented by $-(O-CH_2CH(CH_3))y_1-$, wherein $y_1$ is an integer from 2 to 90,
   a structure represented by $-(O-CH_2CH_2CH_2)y_2-$, wherein $y_2$ is an integer from 2 to 90,
   a structure represented by $-(O-CH_2CH_2CH_2CH_2)z_1-$, wherein $z_1$ is an integer from 2 to 80,
   a structure represented by $-(O-CH(CH_3)CH_2CH_2)z_2-$, wherein $z_2$ is an integer from 2 to 80,
   a structure represented by $-(O-CH_2CH(CH_3)CH_2)z_3-$, wherein $z_3$ is an integer from 2 to 80, and
   a structure represented by $-(O-CH_2CH_2CH(CH_3))z_4-$, wherein $z_4$ is an integer from 2 to 80.

7. The modified polyolefin resin composition according to claim 1, wherein the polyetheramine (B) has a primary amino group or a secondary amino group at one end thereof, and the polyetheramine (B) has a weight average molecular weight (Mw) of 200 to 50000.

8. The modified polyolefin resin composition according to claim 1, wherein the polyetheramine (B) has an HLB value of 3 to 20.

9. The modified polyolefin resin composition according to claim 1, wherein the compound having a polymerizable unsaturated group (C) has a weight average molecular weight (Mw) of 5000 or less.

10. The modified polyolefin resin composition according to claim 1, wherein the compound having a polymerizable unsaturated group (C) comprises a compound having a hydroxy group and one or more polymerizable unsaturated groups, and a compound having an alkyleneoxy group and/or a linear or branched alkyl group having 1 to 20 carbon atoms and one or more polymerizable unsaturated groups.

11. A cured product obtained by curing the modified polyolefin resin composition of any one of claims 1 to 10.

**12.** An ink comprising the modified polyolefin resin composition of any one of claims 1 to 10.

**13.** An adhesive comprising the modified polyolefin resin composition of any one of claims 1 to 10.

**14.** A primer comprising the modified polyolefin resin composition of any one of claims 1 to 10.

**15.** A paint comprising the modified polyolefin resin composition of any one of claims 1 to 10.

**16.** An in-mold coating paint comprising the modified polyolefin resin composition of any one of claims 1 to 10.

## INTERNATIONAL SEARCH REPORT

International application No.
**PCT/JP2024/003043**

### A. CLASSIFICATION OF SUBJECT MATTER

***C08F 2/44***(2006.01)i; ***C08K 5/10***(2006.01)i; ***C08L 23/26***(2006.01)i; ***C08L 71/00***(2006.01)i; ***C08L 79/02***(2006.01)i; ***C09D 5/00***(2006.01)i; ***C09D 11/108***(2014.01)i; ***C09D 123/30***(2006.01)i; ***C09J 123/30***(2006.01)i
FI: C08F2/44 C; C08L23/26; C08L71/00 Z; C08K5/10; C09D5/00 D; C09D123/30; C09D11/108; C09J123/30; C08L79/02

According to International Patent Classification (IPC) or to both national classification and IPC

### B. FIELDS SEARCHED

Minimum documentation searched (classification system followed by classification symbols)

C08F2/00-2/60; 6/00-246/00; 301/00; C08L1/00-101/14; C08K3/00-13/08; C09D1/00-10/00; 101/00-201/10; C09J1/00-5/10; 9/00-201/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2017/213250 A1 (MITSUBISHI CHEMICAL CORPORATION) 14 December 2017 (2017-12-14)<br>claims 1, 5, paragraphs [0040]-[0041], [0043], [0049], [0052]-[0053], [0069], [0077]-[0079], production examples 1-2, example 1 | 1-16 |
| A | JP 06-128429 A (MITSUI SEKIYU KAGAKU KOGYO K.K.) 10 May 1994 (1994-05-10)<br>entire text | 1-16 |
| A | JP 2022-013395 A (NIPPON PAPER INDUSTRIES CO., LTD.) 18 January 2022 (2022-01-18)<br>entire text | 1-16 |
| A | JP 2006-036920 A (TOYO KASEI KOGYO CO., LTD.) 09 February 2006 (2006-02-09)<br>entire text | 1-16 |
| A | WO 2021/132523 A1 (TOYOBO CO., LTD.) 01 July 2021 (2021-07-01)<br>entire text | 1-16 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 March 2024** | **09 April 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**
**Information on patent family members**

International application No.
**PCT/JP2024/003043**

| Patent document cited in search report | Publication date (day/month/year) | Patent family member(s) | Publication date (day/month/year) |
|---|---|---|---|
| WO 2017/213250 A1 | 14 December 2017 | US 2019/0106575 A1<br>claims 1, 5, paragraphs [0046]-[0047], [0049], [0055], [0058]-[0059], [0076], [0093]-[0102], production examples 1-2, example 1<br>EP 3470439 A1<br>CN 109312010 A | |
| JP 06-128429 A | 10 May 1994 | (Family: none) | |
| JP 2022-013395 A | 18 January 2022 | (Family: none) | |
| JP 2006-036920 A | 09 February 2006 | US 2008/0287594 A1<br>entire text<br>WO 2006/011402 A1<br>EP 1772488 A1<br>CA 2572850 A1<br>CN 1989200 A<br>KR 10-2007-0046105 A | |
| WO 2021/132523 A1 | 01 July 2021 | US 2023/0090721 A1<br>entire text<br>EP 4083160 A1<br>CN 114901776 A<br>KR 10-2022-0119704 A<br>TW 202134382 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S5975958 A
- JP S6099138 A
- JP H616746 A
- JP H812913 A